# EUROPÄISCHE PATENTSCHRIFT

(11) **EP 1 502 400 B1**
(45) Veröffentlichungstag und Bekanntmachung des Hinweises auf die Patenterteilung: **26.07.2006**
(21) Anmeldenummer: 03729867.6
(22) Anmeldetag: 07.05.2003
(51) Int. Cl.: H04L 12/64

(54) **VERFAHREN UND SYSTEM ZUR ÜBERTRAGUNG VON DATEN ÜBER SCHALTBARE DATENNETZE**
METHOD AND SYSTEM FOR TRANSMITTING DATA VIA SWITCHABLE DATA NETWORKS
PROCEDE ET SYSTEME DE TRANSMISSION DE DONNEES PAR DES RESEAUX DE DONNEES COMMUTABLES

(30) Priorität: 07.05.2002 DE 10220334
(43) Veröffentlichungstag der Anmeldung: 02.02.2005
(73) Patentinhaber: SIEMENS AKTIENGESELLSCHAFT, 80333 München (DE)
(72) Erfinder: KASPER, Michael, 90411 Nürnberg (DE); KRAUSE, Karl-Heinz, 90475 Nürnberg (DE); SINN, Ulrich, 91056 Erlangen (DE)
(86) Internationale Anmeldenummer: PCT/DE2003/001467
(87) Internationale Veröffentlichungsnummer: WO 2003/096637

(56) Entgegenhaltungen:
- EP-A- 1 001 573
- US-B1- 6 339 584
- GUSMAO DE LIMA F ET AL: "A frame stream controller IP" THE 2000 IEEE INTERNATIONAL SYMPOSIUM ON CIRCUITS AND SYSTEMS, Bd. 5, 28. Mai 2000 (2000-05-28), Seiten 721-724, XP010504298
- SHARMA S ; GOPALAN K ; NINGNING ZHU; GANG PENG; DE P ; CHIUEH T -C: "Implementation experiences of bandwidth guarantee on a wireless LAN" MULTIMEDIA COMPUTING AND NETWORKING 2002, Bd. 4673, 23. - 24. Januar 2002, Seiten 16-27, XP002257122 San Jose, CA, USA
- HIRSCHMANN: "Real Time Services (QoS) in Ethernet Based Industrial Automation Networks" HIRSCHMANN NETWORK SYSTEMS, [Online] 20. November 2000 (2000-11-20), Seiten 1-56, XP002257123 Gefunden im Internet: <URL:http://www.bitpipe.com/data/detail?id =974222825_317&type=RES&x=632991863> [gefunden am 2003-10-09]

## Beschreibung

Die Erfindung bezieht sich auf ein Verfahren und ein System zur Übertragung von Daten über schaltbare Datennetze, insbesondere Ethernet im Bereich industrieller Anlagen, bei dem echtzeitkritische und nicht echtzeitkritische Daten übertragen werden, wobei das schaltbare Datennetz mit zumindest einer drahtlosen Übertragungsstrecke zwischen wenigstens zwei Teilnehmern, insbesondere einem Sender und einem Empfänger, aufgebaut ist.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Ist der Teilnehmer mit einer Koppeleinheit integriert, so kann die Koppeleinheit auch nur mit einer anderen Koppeleinheit oder einem anderen Teilnehmer verbunden sein, also ein Endgerät darstellen. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten. Übertragungsstrecken zwischen zwei Koppeleinheiten oder zwischen einer Koppeleinheit und einem Teilnehmer können drahtgebunden oder drahtlos ausgebildet sein. Eine drahtlose Übertragung von Daten kann beispielsweise über Funk oder Infrarotlicht erfolgen. Bei einem Aufbau mit ausschließlich drahtlosen Übertragungsstrecken wird das Datennetz als drahtloses, bei einem mit sowohl drahtlosen als auch drahtgebundenen Übertragungsstrecken als heterogenes Datennetz bezeichnet. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen als Übertragungsstrecken, d. h. ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Ebenso ist an sich aus dem Stand der Technik bekannt, in einem solchen Automatisierungssystem ein synchrones getaktetes Kommunikationssystem mit Äquidistanz-Eigenschaften zu verwenden. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z. B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z. B. Feldbus, Profibus, Ethernet, Industrial Ethernet, FireWire oder auch PC-interne Bussysteme (PCI), etc. verwendet.

Automatisierungskomponenten (z. B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z. B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z. B. Temperaturregelungen) der Automatisierungskomponente können ebenfalls nur über diesen Kommunikationstakt mit anderen Komponenten (z. B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Aus dem Stand der Technik bekannte Systemkomponenten nutzen zur Kommunikation für jede Prozess- bzw. Automatisierungsebene nur ein Kommunikationssystem bzw. einen Kommunikationszyklus (Fast-cycle), in dessen Takt alle relevanten Informationen übertragen werden. Daten, die nur im Slow-cycle benötigt werden, können z. B. über zusätzliche Protokolle gestaffelt übertragen werden, um die Anforderungen an die Bandbreite zu begrenzen. Das bedeutet zusätzlichen Softwareaufwand in den Automatisierungskomponenten. Weiterhin wird sowohl die Busbandbreite als auch der minimal mögliche Kommunikationszyklus im gesamten System durch die niederperformanteste Komponente bestimmt.

Aus der US 6 339 584 B1 ist ein Datennetz mit einer Rahmenstruktur bekannt, die sowohl einen Bereich für die Übertragung von echtzeitkritischen als auch einen Bereich für die Übertragung von nicht echtzeitkritischen Daten aufweist. Dabei ist die Länge der Rahmenstruktur variabel einstellbar.

Aufgabe der Erfindung ist es, ein System und ein Verfahren zur Übertragung von Daten über heterogene, schaltbare Datennetze, insbesondere Ethernet, anzugeben, das einen Mischbetrieb von echtzeitkritischer und nicht echtzeitkritischer, insbesondere inter- bzw. intranetbasierter Datenkommunikation, im selben Datennetz ermöglicht.

Diese Aufgabe wird durch ein Verfahren zur Übertragung von Daten über schaltbare Datennetze, insbesondere Ethernet im Bereich industrieller Anlagen, mit den in Anspruch 1 genannten Merkmalen sowie ein entsprechendes System mit den in Anspruch 33 angegebenen Merkmalen gelöst. In den abhängigen Ansprüchen sind Weiterbildungen der Erfindung beschrieben.

Der Erfindung liegt die Erkenntnis zugrunde, dass eine offene internetbasierte Kommunikation spontane Kommunikation ist, d. h., dass sowohl Zeitpunkt solcherart Kommunikation als auch die anfallende Datenmenge, die dabei zu transferieren ist, nicht vorher bestimmbar ist. Dadurch sind Kollisionen in den Koppeleinheiten bei schaltbaren Hochgeschwindigkeitsnetzen, insbesondere Fast Ethernet oder Switched Ethernet, nicht auszuschließen. Um die Vorteile der Internetkommunikationstechnologie auch bei der Echtzeitkommunikation in schaltbaren Datennetzen im Bereich der Automatisierungstechnik, insbesondere der Antriebstechnik nutzen zu können, ist ein Mischbetrieb von Echtzeitkommunikation mit sonstiger spontaner, nicht echtzeitkritischer Kommunikation, insbesondere Internetkommunikation wünschenswert. Dies wird dadurch möglich, dass die Echtzeitkommunikation, die in den hier betrachteten Anwendungsgebieten vorwiegend zyklisch auftritt und somit im Voraus planbar ist, von der im Gegensatz dazu nicht planbaren, nicht echtzeitkritischen Kommunikation, insbesondere der offenen, internetbasierten Kommunikation strikt getrennt wird.

Die Kommunikation zwischen den Teilnehmern erfolgt dabei in Übertragungszyklen, wobei jeder Übertragungszyklus in wenigstens einen ersten Bereich zur Übertragung von echtzeitkritischen Daten zur Echtzeitsteuerung, beispielsweise der dafür vorgesehenen industriellen Anlagen und wenigstens einen zweiten Bereich zur Übertragung von nicht echtzeitkritischen Daten, beispielsweise bei der offenen, internetfähigen Kommunikation unterteilt ist. Eine besonders vorteilhafte Ausgestaltung der Erfindung ist dabei dadurch gekennzeichnet, dass jedem Teilnehmer eine Koppeleinheit zugeordnet ist, die zum Senden und/oder zum Empfangen und/oder zur Weiterleitung der zu übertragenden Daten vorgesehen ist.

In heterogenen schaltbaren Datennetzen, d. h. in Datennetzen, in denen sowohl Übertragungsstrecken mit drahtloser als auch Übertragungsstrecken mit drahtgebundener Übertragung der Daten vorhanden sind, sind Übertragungsstrecken miteinander zu verbinden, die sich neben der physikalischen Unterschiede oft auch in ihrer Leistungsfähigkeit voneinander unterscheiden. Datenübertragungsstrecken mit drahtloser Datenübertragung weisen meist eine niedrigere Datenübertragungsrate als drahtgebundener Übertragungsstrecken auf. Beispielsweise besitzt das Funknetz nach IEEE 802.11a eine Bruttodatenrate von 54 Mb/s, während Ethernet bei drahtgebundener Übertragung bereits eine Bruttodatenrate von 1 Gb/s erreicht. Drahtlose Übertragungsstrecken, insbesondere über Funk, arbeiten mit Zykluszeiten, die aus physikalischen Gründen, z. B. aufgrund von Eigenschaften der verwendeten Hochfrequenzschaltungen, deutlich über den Zykluszeiten liegen können, die bei drahtgebundener Datenübertragung möglich sind. Auf Übertragungsstrecken bestehende Kommunikationsverbindungen, die sich in zumindest einem der angeführten Punkte unterscheiden, werden im Folgenden als verschieden performant bezeichnet. Besonders vorteilhaft ist somit eine Ausgestaltung der Erfindung, bei welcher in einer Koppeleinheit zur Verbindung einer ersten Übertragungsstrecke mit drahtloser Datenübertragung und einer zweiten Übertragungsstrecke mit drahtgebundener Datenübertragung eine Kommunikationsschnittstelle vorgesehen ist, welche eine Kommunikationsschnittstelle zwischen einer ersten Kommunikationsverbindung auf der ersten Übertragungsstrecke mit einem ersten Übertragungszyklus einer ersten Länge und einer zweiten Kommunikationsverbindung auf der zweiten Übertragungsstrecke mit einem zweiten Übertragungszyklus einer zweiten Länge aufweist. In der Kommunikationsschnittstelle ist ein elektronischer Schaltkreis vorhanden mit einer Empfangsliste für den ersten Übertragungszyklus und einer Sendeliste für den zweiten Übertragungsszyklus, wobei ein gemäß der Empfangsliste empfangenes Datentelegramm einem Element der Sendeliste zugeordnet ist, und mit einem Empfangspuffer, einem Sendepuffer und einem Zwischenspeicher für gemäß der Empfangsliste vollständig empfangene Datentelegramme und gemäß der Sendeliste zu sendende Datentelegramme, wobei sowohl der Empfangspuffer als auch der Sendepuffer mit dem Zwischenspeicher verbindbar sind. Eine derartige Kommunikationsschnittstelle zwischen verschieden performanten, zyklisch getakteten Kommunikationsverbindungen erlaubt es beispielsweise, drahtlose und drahtgebundene Übertragungsstrecken mit verschiedenen Übertragungseigenschaften miteinander zu verbinden. Insbesondere in einem Automatisierungssystem erlaubt es eine derartige Kommunikationsschnittstelle, ein Datennetz mit verschieden performanten Kommunikationsverbindungen zu betreiben, deren Charakteristik der jeweiligen Applikation angepasst ist.

Beispielsweise kann für langsame Ein-/Ausgabebaugruppen eine niederperformante Kommunikationsschnittstelle zu Verfügung gestellt werden, so dass die Baugruppen über eine entsprechende Schnittstelle mit der zugeordneten Ablaufebene in der Steuerung kommunizieren können.

Ein besonderer Vorteil ist darin zu sehen, dass sie das Zusammenführen von Datentelegrammen unterschiedlicher Kommunikationsverbindungen unterschiedlicher Übertragungsraten und/oder unterschiedlicher Kommunikationszyklen auf der Ebene eines Koppelknotens erlaubt, ohne dass hierfür ein Anwendungsprogramm auf einer höheren logischen Schicht benötigt wird. Dies ist insbesondere für eine Kommunikationsanschaltung, einen so genannten Switch-ASIC, vorteilhaft, wobei diese Kommunikationsanschaltung mehrere separate Ports für verschiedene Kommunikationsverbindungen beinhalten kann.

Ein weiterer besonderer Vorteil der Erfindung liegt darin, dass ein konsistenter Austausch von Echtzeitdaten in einem deterministischen Kommunikationssystem unterschiedlicher Teilnetzwerke, die jeweils unterschiedliche Übertragungsraten und/oder Kommunikationszyklen aufweisen, ermöglicht wird. Für die konsistente Übertragung von Echtzeitdaten ist entscheidend, dass diese jeweils einem bestimmten Übertragungszyklus zugeordnet sind, und zwar auch über die Kommunikationsschnittstelle zwischen den einzelnen Teil-Netzwerken hinweg. Eine solche feste Zuordnung von Echtzeitdaten zu bestimmten Übertragungszyklen über die Grenzen der Teil-Netzwerke hinweg erlaubt die Erfindung.

In einer bevorzugten Ausführungsform der Erfindung erfolgt der konsistente Datenaustausch über einen Zwischenpuffer, das heißt, von dem Empfangsport werden die Daten immer in den gemeinsamen Zwischenpuffer geschrieben und von dem Sendeport werden die Daten zu dem entsprechenden Sendezeitpunkt aus dem Zwischenpuffer abgerufen. Zusätzlich kann es an jedem Port einen Sende- und Empfangspuffer geben. Die Tiefe der Sende-und Empfangspuffer muss in diesem Fall mindestens ausreichen, um ein Datentelegramm einer maximalen Telegrammlänge aufzunehmen. Erst wenn das Datentelegramm am Empfangsport komplett empfangen worden ist, werden die Daten in den gemeinsamen Zwischenspeicher kopiert. Beim Senden werden die Daten aus dem Zwischenspeicher in den Sendepuffer des Sendeports kopiert.

Nach einer weiteren bevorzugten Ausführungsform der Erfindung wird durch eine Zugriffssteuerung des gemeinsamen Zwischenspeichers gewährleistet, dass es während des Lesens und des Schreibens in den Zwischenspeicher zu keinen Überholungen kommen kann.

Von besonderem Vorteil ist dabei, dass auf einem Koppelknoten nur eine Standardkommunikationsschnittstelle implementiert werden muss und dass keine zusätzliche Instanz zum umkopieren der Daten zwischen den verschiedenen Kommunikationsschnittstellen notwendig ist.

Ein weiterer Vorteil der Erfindung ist, dass sich ein Automatisierungssystem realisieren lässt, welches verschiedenperformante Teil-Netze beinhaltet, insbesondere zur Anwendung bei und in Verpackungsmaschinen, Pressen, Kunststoffspritzmaschinen, Textilmaschinen, Druckmaschinen, Werkzeugmaschinen, Roboter, Handlingssystemen, Holzverarbeitungsmaschinen, Glasverarbeitungsmaschinen, Keramikverarbeitungsmaschinen sowie Hebezeugen und in heterogenen schaltbaren Datennetzen.

Eine außerordentlich vorteilhafte Ausgestaltung der Erfindung ist dadurch gekennzeichnet, dass alle Teilnehmer und Koppeleinheiten des schaltbaren Datennetzes durch Zeitsynchronisation untereinander stets eine gemeinsame synchrone Zeitbasis aufweisen. Dies ist Voraussetzung für eine Trennung der planbaren Echtzeitkommunikation von der nicht planbaren, nicht echtzeitkritischen Kommunikation. Die Trennung der planbaren Echtzeitkommunikation und der nicht planbaren, nicht echtzeitkritischen Kommunikation wird durch Anwendung des Verfahrens zur Zeitsynchronisation gemäß DE 100 04 425 gewährleistet. Durch permanente Anwendung dieses Verfahrens auch im laufenden Betrieb eines verteilten Automatisierungssystems sind alle Teilnehmer und Koppeleinheiten des schaltbaren Datennetzes stets auf eine gemeinsame Zeitbasis synchronisiert, was infolgedessen gleicher Startpunkt jedes Übertragungszyklus für alle Teilnehmer und Koppeleinheiten bedeutet. Da alle echtzeitkritischen Datenübertragungen durch den zyklischen Betrieb vor der eigentlichen Datenübertragung bekannt sind und deshalb im Voraus geplant werden können, ist sichergestellt, dass für alle Teilnehmer und Koppeleinheiten die Echtzeitkommunikation so gesteuert werden kann, dass keine Störungen, beispielsweise Kollisionen, bei der Datenübertragung der echtzeitkritischen Datentelegramme selbst auftreten und alle geplanten kritischen Datentransferzeitpunkte exakt eingehalten werden.

Eine weitere besonders vorteilhafte Ausgestaltung der Erfindung ist dadurch gekennzeichnet, dass alle nicht echtzeitkritischen Daten, die während des, für die echtzeitkritische Kommunikation vorgesehenen Bereichs eines Übertragungszyklus übertragen werden sollen, von der jeweiligen Koppeleinheit zwischengespeichert und während des, für die nicht echtzeitkritische Kommunikation vorgesehenen Bereichs dieses oder eines folgenden Übertragungszyklus übertragen werden, d. h. eine im ersten Bereich eines Übertragungszyklus, der für die Echtzeitkommunikation reserviert ist, möglicherweise auftretende, nicht geplante Internetkommunikation wird in den zweiten Bereich des Übertragungszyklus, der für die spontane, nicht echtzeitkritische Kommunikation vorbehalten ist, verschoben, wodurch Störungen der Echtzeitkommunikation vollständig vermieden werden. Die entsprechenden Daten der spontanen, nicht echtzeitkritischen Kommunikation werden dabei von der jeweils betroffenen Koppeleinheit zwischengespeichert und nach Ablauf des Bereichs für die Echtzeitkommunikation erst im zweiten Bereich des Übertragungszyklus, der für die spontane, nicht echtzeitkritische Kommunikation vorbehalten ist, gesendet. Dieser zweite Bereich, d. h. die gesamte Zeitdauer bis zum Ende des Übertragungszyklus, steht allen Teilnehmern für die nicht planbare, nicht echtzeitkritische Kommunikation, insbesondere Internetkommunikation zur Verfügung, ebenfalls ohne die Echtzeitkommunikation zu beeinflussen, da diese zeitlich getrennt durchgeführt wird.

Kollisionen mit den echtzeitkritischen Datentelegrammen in den Koppeleinheiten können dadurch vermieden werden, dass alle nicht echtzeitkritischen Daten, die während des, für die Übertragung der nicht echtzeitkritischen Daten vorgesehenen Bereichs eines Übertragungszyklus nicht übertragen werden können, von der jeweiligen Koppeleinheit zwischengespeichert und während des, für die Übertragung der nicht echtzeitkritischen Daten vorgesehenen Bereichs eines späteren Übertragungszyklus übertragen werden.

Eine weitere vorteilhafte Ausgestaltung der Erfindung ist dadurch gekennzeichnet, dass die Zeitdauer des Bereichs zur Übertragung von nicht echtzeitkritischen Daten innerhalb eines Übertragungszyklus automatisch durch die Zeitdauer des Bereichs zur Übertragung von echtzeitkritischen Daten festgelegt wird. Vorteil dieser Anordnung ist, dass jeweils nur die notwendige Übertragungszeit für den echtzeitkritischen Datenverkehr verwendet wird und die restliche Zeit automatisch für die nicht echtzeitkritische Kommunikation, beispielsweise für die nicht planbare Internetkommunikation bzw. andere nicht echtzeitkritische Anwendungen zur Verfügung steht. Besonders vorteilhaft ist, dass die Zeitdauer des Bereichs zur Übertragung von echtzeitkritischen Daten innerhalb eines Übertragungszyklus jeweils durch die verbindungsspezifisch zu übertragenden Daten bestimmt wird, d. h., die Zeitdauer der beiden Bereiche wird für jede einzelne Datenverbindung durch die jeweils notwendige Datenmenge der zu übertragenden echtzeitkritischen Daten bestimmt, wodurch die Aufteilung der beiden Bereiche und damit die Zeit, die zur nicht echtzeitkritischen Kommunikation zur Verfügung steht, für jede einzelne Datenverbindung zwischen zwei Koppeleinheiten für jeden Übertragungszyklus optimiert ist.

Eine weitere vorteilhafte Ausgestaltung der Erfindung ist dadurch gekennzeichnet, dass die Zeitdauer eines Übertragungszyklus wenigstens einmal vor der jeweiligen Durchführung der Datenübertragung festgelegt wird. Dies hat den Vorteil, dass dadurch bei jedem Start einer neuen, im Voraus geplanten Datenübertragung die Zeitdauer eines Übertragungszyklus auf die jeweiligen Erfordernisse zur Echtzeitkommunikation bzw. zur offenen, internetfähigen Kommunikation abgestimmt werden kann. Selbstverständlich ist es auch möglich, dass die Zeitdauer eines Übertragungszyklus und/oder die Zeitdauer des Bereichs zur Übertragung von echtzeitkritischen Daten eines Übertragungszyklus je nach Erfordernis verändert werden kann, beispielsweise zu vorher geplanten, festen Zeitpunkten und/oder nach einer geplanten Anzahl von Übertragungszyklen, vorteilhafterweise vor Beginn eines Übertragungszyklus durch Umschalten auf andere geplante, echtzeitkritische Übertragungszyklen. Vorteilhafterweise liegt die Zeitdauer eines Übertragungszyklus je nach Anwendungszweck zwischen einer Mikrosekunde und zehn Sekunden.

Eine weitere überaus vorteilhafte Ausgestaltung der Erfindung ist dadurch gekennzeichnet, dass Neuplanungen der Echtzeitkommunikation jederzeit im laufenden Betrieb eines Automatisierungssystems durchgeführt werden können, wodurch eine flexible Anpassung der Echtzeitsteuerung an sich kurzfristig ändernde Randbedingungen gewährleistet ist. Dadurch ist ebenfalls eine Änderung der Zeitdauer eines Übertragungszyklus möglich.

Eine weitere vorteilhafte Ausgestaltung der Erfindung ist dadurch gekennzeichnet, dass ein Teil des für die Übertragung der echtzeitkritischen Daten vorgesehenen Bereichs des Übertragungszyklus für die Übertragung von Daten zur Organisation der Datenübertragung vorgesehen ist. Von besonderem Vorteil hat sich dabei erwiesen, dass die Datentelegramme zur Organisation der Datenübertragung am Anfang des Bereichs zur Übertragung echtzeitkritischer Daten des Übertragungszyklus übertragen werden. Daten zur Organisation der Datenübertragung sind dabei beispielsweise Daten zur Zeitsynchronisation der Teilnehmer und Koppeleinheiten des Datennetzes, Daten zur Topologieerkennung des Netzwerks, etc.

Eine weitere vorteilhafte Ausgestaltung der Erfindung ist dadurch gekennzeichnet, dass für alle zu übertragenden, echtzeitkritischen Datentelegramme Sende- und Empfangszeitpunkt bei Sender und/oder Empfänger und in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt sind, d. h. es ist in einer Koppeleinheit vermerkt, wann und an welchen Ausgangsport ein zum Zeitpunkt X ankommendes echtzeitkritisches Datentelegramm weiter gesendet werden soll.

Eine weitere überaus vorteilhafte Ausgestaltung der Erfindung ist dadurch gekennzeichnet, dass die Weiterleitungszeitpunkte so geplant sind, dass jedes echtzeitkritische Datentelegramm spätestens zum Weiterleitungszeitpunkt oder früher bei der entsprechenden Koppeleinheit ankommt, es aber auf jeden Fall erst zum Weiterleitungszeitpunkt weitergesendet wird. Damit ist das Problem von Zeitunschärfen, das sich insbesondere bei langen Übertragungsketten bemerkbar macht, eliminiert. Dadurch können die echtzeitkritischen Datentelegramme unmittelbar, ohne zeitlichen Zwischenraum gesendet bzw. weitergeleitet werden, d. h. eine schlechtere Nutzung der Bandbreite bei Echtzeitdatenpaketen wird vermieden. Selbstverständlich ist es aber auch möglich bei Bedarf Sendepausen zwischen der Übertragung der einzelnen Datenpakete einzubauen.

Ein weiterer Vorteil der zeitbasierten Weiterleitung ist, dass die Zielfindung in der Koppeleinheit nicht mehr adressbasiert ist, weil von vornherein klar ist, an welchen Port weitergesendet werden soll. Damit ist die optimale Nutzung aller vorhandenen Verbindungsstrecken innerhalb des schaltbaren Datennetzes möglich. Damit kann in vorteilhafter Weise bei Vorhandensein von mobilen Teilnehmern im Datennetz berücksicht werden, über welche Koppeleinheit ein mobiler Teilnehmer aktuell mit einer drahtlosen Übertragungsstrecke erreichbar ist. Redundante Verbindungsstrecken des schaltbaren Datennetzes, die für die adressbasierte Durchschaltung der nicht echtzeitkritischen Kommunikation nicht benutzt werden dürfen, weil es andernfalls zu Zirkularitäten von Datenpaketen kommen würde, können aber im Voraus für die Planung der Weiterleitungsstrecken berücksichtigt und somit für die Echtzeitkommunikation benutzt werden. Dadurch ist die Realisierung von redundanten Netzwerktopologien, z. B. Ringe für fehlertolerante Echtzeitsysteme, möglich. Datenpakete können redundant auf disjunkten Pfaden gesendet werden, Zirkularitäten von Datenpaketen treten nicht auf. Ein weiterer Vorteil der vorausgeplanten Weiterleitung ist, dass die Überwachung jeder Teilstrecke dadurch quittungslos möglich und eine Fehlerdiagnose damit einfach durchführbar ist.

Eine weitere, außerordentlich vorteilhafte Ausgestaltung der Erfindung ist dadurch gekennzeichnet, dass wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann und dabei sichergestellt ist, dass kritische Datentransfers zum gewünschten Zeitpunkt erfolgreich durchgeführt werden, auch wenn der beliebige Teilnehmer eine nicht echtzeitkritische Kommunikation, insbesondere Internetkommunikation parallel zu einer echtzeitkritischen Kommunikation durchführt.

Eine weitere, besonders vorteilhafte Ausgestaltung der Erfindung ist dadurch gekennzeichnet, dass eine Koppeleinheit in einen Teilnehmer integriert ist. Dadurch ergibt sich ein außerordentlicher Kostenvorteil gegenüber den, bisher immer als selbständige Bausteine realisierten Koppeleinheiten, auch Switches genannt.

Eine weitere vorteilhafte Ausgestaltung der Erfindung ist dadurch gekennzeichnet, dass eine Koppeleinheit zwei getrennte Zugänge zum jeweiligen Teilnehmer aufweist, wobei ein Zugang für den Austausch von echtzeitkritischen Daten und der andere Zugang für den Austausch von nicht echtzeitkritischen Daten vorgesehen ist. Dies hat den Vorteil, dass echtzeitkritische und nicht echtzeitkritische Daten getrennt verarbeitet werden. Der Zugang für die nicht echtzeitkritischen Daten entspricht der handelsüblichen Schnittstelle eines regulären Ethernet-Kontrollers wodurch die bisher existierende Software, insbesondere Treiber, ohne Einschränkung verwendbar ist. Dasselbe gilt für die bisher existierende Software für ein nicht echtzeitfähiges Datennetz.

Im Folgenden wird die Erfindung anhand der in den Figuren dargestellten Ausführungsbeispiele näher beschrieben und erläutert.

Es zeigen:
- FIG 1: eine schematische Darstellung eines Ausführungsbeispiels für ein verteiltes Automatisierungssystems,
- FIG 2: den prinzipiellen Aufbau eines Übertragungszyklus,
- FIG 3: die prinzipielle Arbeitsweise in einem geschalteten Netzwerk,
- FIG 4: eine schematische Darstellung der Schnittstellen zwischen einem lokalen Teilnehmer und einer Koppeleinheit,
- FIG 5: ein Blockdiagramm einer Ausführungsform eines elektronischen Schaltkreises und entsprechende Kommunikationsverbindungen zwischen zwei Teilnehmern verschieden performanter Netze, beispielsweise zwischen der Recheneinheit 1 und dem Teilnehmer 61 in Figur 1,
- FIG 6: ein Flussdiagramm einer bevorzugten Ausführungsform des Verfahrens für den Empfang und
- FIG 7: ein Flussdiagramm der bevorzugten Ausführungsform hinsichtlich des Sendens eines Datentelegramms von einem niederperformanten zu einem höherperformanten Netz.

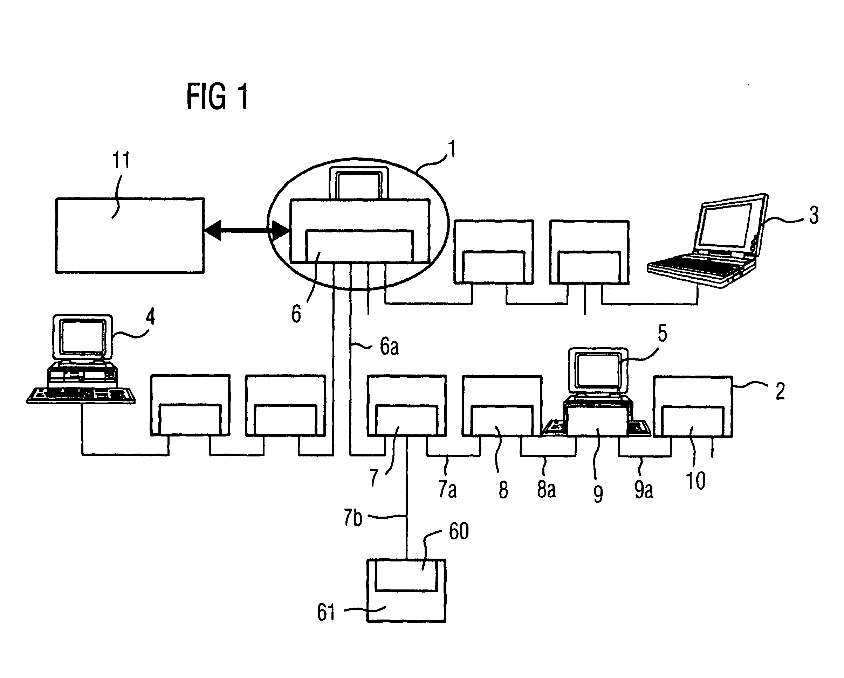

Figur 1 zeigt eine schematische Darstellung eines Ausführungsbeispiels für ein verteiltes Automatisierungssystems, wobei aus Gründen der übersichtlichen Darstellung als Teil der Erfindung jeweils die Koppeleinheit bereits in den betreffenden Teilnehmer integriert ist. Der bisherige Stand der Technik sieht im Gegensatz dazu jede der hier bereits in den betreffenden lokalen Teilnehmer integrierten Koppeleinheiten als eigenes Gerät, das jeweils zwischen zwei Teilnehmer geschaltet ist. Die Integration der jeweiligen Koppeleinheit in einen Teilnehmer ist kostengünstiger und wartungsfreundlicher.

Das gezeigte Automatisierungssystem besteht aus mehreren Teilnehmern, die gleichzeitig sowohl als Sender als auch als Empfänger ausgeprägt sein können, beispielsweise aus einem Steuerungsrechner 1, mehreren Antrieben, bei denen aus Gründen der übersichtlichen Darstellung nur der Antrieb 2 bezeichnet ist, einem mobilen Teilnehmer 61 sowie weiteren Rechnern 3, 4, 5, die mittels Verbindungskabel, insbesondere Ethernetkabel, oder Funkstrecken, von denen aus Gründen der übersichtlichen Darstellung nur die Verbindungen 6a, 7a, 7b, 8a, 9a bezeichnet sind, zu einem schaltbaren Datennetz, insbesondere Ethernet, miteinander verbunden sind. Die für die Topologie eines Ethernet typischen Koppeleinheiten, bei denen aus Gründen der übersichtlichen Darstellung nur die Koppeleinheiten 6, 7, 8, 9, 10 und 60 bezeichnet sind, sind bei dieser Darstellung bereits in die jeweiligen Teilnehmer integriert. Die Koppeleinheiten dienen zum Senden und/oder zum Empfangen und/oder zur Weiterleitung der zu übertragenden Daten.

In dem gezeigten Ausführungsbeispiel sind die beiden Verbindungen 7a und 7b zwischen der Koppeleinheit 7 und der Koppeleinheit 8 bzw. zwischen der Koppeleinheit 7 und der Koppeleinheit 60 des mobilen Teilnehmers 61 durch drahtlose Übertragungsstrecken gebildet, die eine niederere Übertragungsrate als die übrigen Verbindungen mit drahtgebundener Datenübertragung aufweisen. Dazu sind die Koppeleinheiten 8 und 60 mit jeweils einem Funkmodul, die Koppeleinheit 7 mit zwei Funkmodulen ausgestattet, die eine Duplexübertragung ermöglichen. Zur Vermeidung einer gegenseitigen Beeinflussung der Funksignale werden für jede Übertragungsrichtung und jede Verbindung gesonderte Funkkanäle genutzt. Alternativ zu den beschriebenen Verbindungen durch Funk können selbstverständlich Licht, insbesondere Infrarotlicht, Schall oder andere Signalarten zur Übertragung der Daten über drahtlose Übertragungsstrecken verwendet werden.

Der Steuerungsrechner 1 ist beispielsweise zusätzlich an ein firmeninternes Kommunikationsnetz beispielsweise Intranet 11 und/oder das weltweite Kommunikationsnetz Internet 11 angeschlossen. Vom Steuerungsrechner 1 werden echtzeitkritische Daten beispielsweise zur Steuerung von Antrieb 2 über die Verbindungen 6a, 7a, 8a, 9a gesendet. Diese echtzeitkritischen Daten müssen genau zum Zeitpunkt X von Antrieb 2 verarbeitet werden, da sonst unerwünschte Auswirkungen, wie z. B. verspäteter Anlauf des Antriebs 2, etc., eintreten, die die Automatisierungsanlage in ihrer Funktionsweise stören. Die jeweilige Weiterleitung der echtzeitkritischen Daten erfolgt durch die Koppeleinheiten 6, 7, 8, 9 bis zur Koppeleinheit 10, die sie an den Empfänger Antrieb 2 übergibt, von dem die Daten zum Zeitpunkt X verarbeitet werden. Im bisherigen Stand der Technik kann ein erfolgreicher echtzeitkritischer Datenverkehr der genannten Art gewährleistet werden, wenn darüber hinaus zur selben Zeit keine sonstige beliebige Kommunikation, beispielsweise Internetkommunikation durch Rechner 5, stattfindet. In diesem Fall, Internetkommunikation zur selben Zeit durch Rechner 5, fordert Rechner 5 beispielsweise eine Internetseite an. Diese nicht echtzeitkritischen Daten werden über die Verbindungen 8a, 7a, 6a mittels der Koppeleinheiten 9, 8 und 7 an die Koppeleinheit 6 weitergeleitet, welche die Daten an den Rechner 1 übergibt, der schließlich die entsprechende Anfrage an das Internet 11 absetzt und die Antwort über dieselben Verbindungen bzw. Koppeleinheiten in umgekehrter Reihenfolge an Rechner 5 zurücksendet. Die Antwort benutzt damit den gleichen Weg wie die echtzeitkritische Kommunikation. Es können damit Wartesituation in den beteiligten Koppeleinheiten auftreten und die echtzeitkritischen Daten können nicht mehr zeitgerecht beim Antrieb 2 ankommen. Ein fehlerfreier Echtzeitbetrieb kann deshalb mit dem bisherigen Stand der Technik nicht mehr garantiert werden. Die Anwendung der offenbarten Erfindung ermöglicht dagegen parallel zur Echtzeitkommunikation eine beliebige, nicht echtzeitkritische Kommunikation im gleichen Datennetz, ohne Störung der Echtzeitkommunikation. Dies ist durch den Anschluss der Rechner 3 und 4 angedeutet, bei denen keine Koppeleinheit integriert ist und die mittels direktem Ethernet-Anschluss in das dargestellte Automatisierungssystem integriert sind. Die Rechner 3 und 4 nehmen nicht an der Echtzeitkommunikation, sondern nur an der spontanen, internetfähigen, nicht echtzeitkritischen Kommunikation teil, ohne die Echtzeitkommunikation zu stören.

Der Erfindung liegt die Idee zugrunde, dass echtzeitkritische und nicht echtzeitkritische Kommunikation in schaltbaren Datennetzen so voneinander getrennt wird, dass die nicht echtzeitkritische Kommunikation keinen störenden Einfluß auf die echtzeitkritische Kommunikation nimmt. Voraussetzung für diese Trennung ist einerseits, dass alle Teilnehmer und Koppeleinheiten des schaltbaren Datennetzes durch Zeitsynchronisation untereinander stets eine gemeinsame synchrone Zeitbasis aufweisen. Dies wird durch permanente Anwendung des Verfahrens zur Zeitsynchronisation gemäß DE 100 04 425 A1 auch im laufenden Betrieb eines verteilten Automatisierungssystems gewährleistet. Die zweite Voraussetzung für die Trennung ist die Planbarkeit der echtzeitkritischen Kommunikation, was dadurch gegeben ist, dass die Echtzeitkommunikation in den hier betrachteten Anwendungsgebieten insbesondere der Antriebstechnik zyklisch auftritt, d. h. eine Datenübertragung in einem oder mehreren Übertragungszyklen stattfindet.

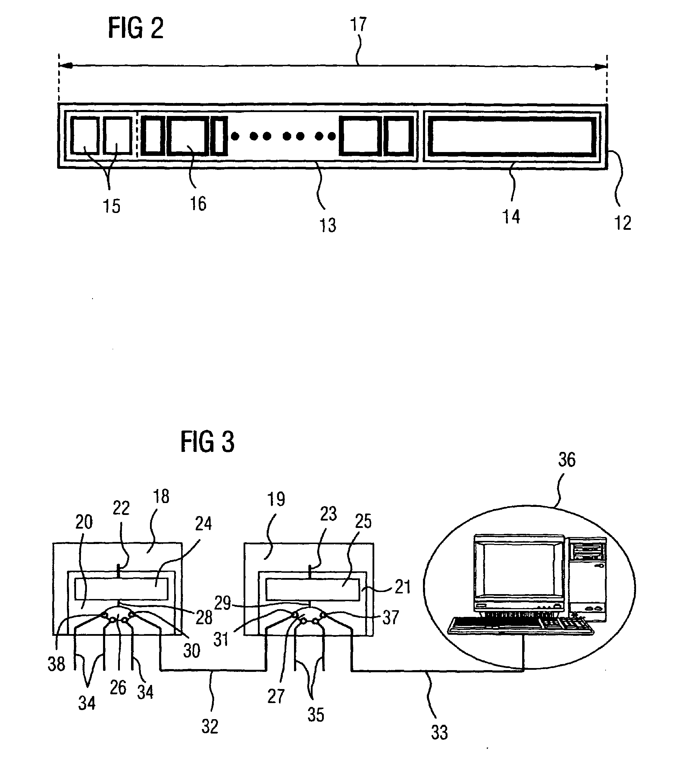

In Figur 2 ist die Ausprägung eines prinzipiellen Aufbaus eines Übertragungszyklus, der in zwei Bereiche aufgeteilt ist, beispielhaft dargestellt. Ein Übertragungszyklus 12 ist in einen ersten Bereich 13, der zur Übertragung echtzeitkritischer Daten vorgesehen ist, und einen zweiten Bereich 14, der zur Übertragung nicht echtzeitkritischer Daten vorgesehen ist, aufgeteilt. Die Länge des dargestellten Übertragungszyklus 12 symbolisiert dessen zeitliche Dauer 17, die vorteilhafterweise je nach Anwendungszweck zwischen einer Mikrosekunde und zehn Sekunden beträgt. Die Zeitdauer 17 eines Übertragungszyklus 12 ist veränderbar, wird aber vor dem Zeitpunkt der Datenübertragung, beispielsweise durch den Steuerungsrechner 1 wenigstens einmal festgelegt. Die Zeitdauer 17 eines Übertragungszyklus 12 und/oder die Zeitdauer des ersten Bereichs 13, der zur Übertragung von echtzeitkritischen Daten vorgesehen ist, kann jederzeit, beispielsweise zu vorher geplanten, festen Zeitpunkten und/oder nach einer geplanten Anzahl von Übertragungszyklen, vorteilhafterweise vor Beginn eines Übertragungszyklus 12 verändert werden, indem der Steuerungsrechner 1 beispielsweise auf andere geplante, echtzeitkritische Übertragungszyklen umschaltet. Darüber hinaus kann der Steuerungsrechner 1 jederzeit im laufenden Betrieb eines Automatisierungssystems je nach Erfordernis Neuplanungen der Echtzeitkommunikation durchführen, wodurch ebenfalls die Zeitdauer 17 eines Übertragungszyklus 12 verändert werden kann. Die absolute Zeitdauer 17 eines Übertragungszyklus 12 ist ein Maß für den zeitlichen Anteil, bzw. die Bandbreite der nicht echtzeitkritischen Kommunikation während eines Übertragungszyklus 12, also die Zeit, die für die nicht echtzeitkritische Kommunikation zur Verfügung steht. So hat die nicht echtzeitkritische Kommunikation beispielsweise bei einer Zeitdauer 17 eines Übertragungszyklus 12 von 500us eine Bandbreite von 30%, bei 10ms eine Bandbreite von 97%. Im ersten Bereich 13, der zur Übertragung echtzeitkritischer Daten vorgesehen ist, ist vor dem Senden der eigentlichen echtzeitkritischen Datentelegramme, von denen der Übersichtlichkeit wegen nur das Datentelegramm 16 bezeichnet ist, eine gewisse Zeitdauer zum Senden von Datentelegrammen zur Organisation der Datenübertragung 15 reserviert. Die Datentelegramme zur Organisation der Datenübertragung 15 enthalten beispielsweise Daten zur Zeitsynchronisation der Teilnehmer und Koppeleinheiten des Datennetzes und/oder Daten zur Topologieerkennung des Netzwerks. Nachdem diese Datentelegramme gesendet wurden, werden die echtzeitkritischen Datentelegramme, respektive Datentelegramm 16, gesendet. Da die Echtzeitkommunikation durch den zyklischen Betrieb im Voraus planbar ist, sind für alle zu übertragenden, echtzeitkritischen Datentelegramme eines Übertragungszyklus 12, respektive Datentelegramm 16, die Sendezeitpunkte bzw. die Zeitpunkte für die Weiterleitung der echtzeitkritischen Datentelegramme vor Beginn der Datenübertragung bekannt, d. h. die Zeitdauer des Bereichs 14 zur Übertragung von nicht echtzeitkritischen Daten ist automatisch durch die Zeitdauer des Bereichs 13 zur Übertragung von echtzeitkritischen Daten festgelegt. Vorteil dieser Anordnung ist, dass jeweils nur die notwendige Übertragungszeit für den echtzeitkritischen Datenverkehr verwendet wird und nach dessen Beendigung die restliche Zeit automatisch für die nicht echtzeitkritische Kommunikation, beispielsweise für die nicht planbare Internetkommunikation bzw. andere nicht echtzeitkritische Anwendungen zur Verfügung steht. Besonders vorteilhaft ist, dass die Zeitdauer des Bereichs 13 zur Übertragung von echtzeitkritischen Daten jeweils durch die verbindungsspezifisch zu übertragenden Daten bestimmt wird, d. h., die Zeitdauer der beiden Bereiche wird für jede einzelne Datenverbindung durch die jeweils notwendige Datenmenge der zu übertragenden echtzeitkritischen Daten bestimmt, wodurch die zeitliche Aufteilung von Bereich 13 und Bereich 14 für jede einzelne Datenverbindung für jeden Übertragungszyklus 12 verschieden sein kann. Es wird jeweils nur die notwendige Übertragungszeit für den echtzeitkritischen Datenverkehr verwendet und die restliche Zeit eines Übertragungszyklus 12 steht automatisch für die nicht echtzeitkritische Kommunikation, beispielsweise für die nicht planbare Internetkommunikation bzw. andere nicht echtzeitkritische Anwendungen für alle Teilnehmer des schaltbaren Datennetzes zur Verfügung. Da die Echtzeitkommunikation im Voraus entsprechend so geplant ist, dass das Ankommen der echtzeitkritischen Datentelegramme in den entsprechenden Koppeleinheiten so geplant ist, dass die betrachteten, echtzeitkritischen Datentelegramme, beispielsweise Datentelegramm 16, spätestens zum Weiterleitungszeitpunkt oder früher bei den entsprechenden Koppeleinheiten ankommen, können die echtzeitkritischen Datentelegramme, respektive Datentelegramm 16, ohne zeitlichen Zwischenraum gesendet bzw. weitergeleitet werden, so dass durch das dicht gepackte Senden, bzw. Weiterleiten, die zur Verfügung stehende Zeitdauer bestmöglich genutzt wird. Selbstverständlich ist es aber auch möglich bei Bedarf Sendepausen zwischen der Übertragung der einzelnen Datentelegramme einzubauen.

Figur 3 zeigt die prinzipielle Arbeitsweise in einem geschalteten Netzwerk. Dargestellt sind stellvertretend für ein Netzwerk ein Teilnehmer 18, beispielsweise ein Antrieb, und ein Teilnehmer 19, beispielsweise ein Steuerrechner, mit jeweils integrierten Koppeleinheiten 20, 21 und einem weiteren Teilnehmer 36 ohne Koppeleinheit, die durch die Datenverbindungen 32, 33 miteinander verbunden sind. Dabei ist die Koppeleinheit 20 über den externen Port 30, die Datenverbindung 32 und den externen Port 31 mit der Koppeleinheit 21 verbunden. Auf die Bezeichnung der anderen dargestellten externen Ports der Koppeleinheiten 20, 21 wurde aus Gründen der übersichtlichen Darstellung verzichtet. Auf die Darstellung weiterer Teilnehmer mit bzw. ohne integrierte Koppeleinheit wurde ebenfalls aus Gründen der übersichtlichen Darstellung verzichtet. Datenverbindungen 34, 35 zu weiteren Teilnehmern ausgehend von den dargestellten Koppeleinheiten 20, 21 sind nur angedeutet. Die Koppeleinheiten 20, 21 besitzen jeweils lokale Speicher 24, 25, die über die internen Schnittstellen 22, 23 mit den Teilnehmern 18, 19 verbunden sind. Über die Schnittstellen 22, 23 tauschen die Teilnehmer 18, 19 Daten mit den entsprechenden Koppeleinheiten 20, 21 aus. Die lokalen Speicher 24, 25 sind innerhalb der Koppeleinheiten 20, 21 über die Datenverbindungen 28, 29 mit den Steuerwerken 26, 27 verbunden. Die Steuerwerke 26, 27 empfangen Daten bzw. leiten Daten weiter über die internen Datenverbindungen 28, 29 von bzw. zu den lokalen Speichern 24, 25 oder über eine oder mehrere der externen Ports, beispielsweise Port 30 oder Port 31. Durch Anwendung des Verfahrens der Zeitsynchronisation haben die Koppeleinheiten 20, 21 stets eine gemeinsame synchrone Zeitbasis. Hat Teilnehmer 21 echtzeitkritische Daten, so werden diese zum vorausgeplanten Zeitpunkt während des Bereichs für die echtzeitkritische Kommunikation über die Schnittstelle 23, den lokalen Speicher 25 und die Verbindung 29 vom Steuerwerk 27 abgeholt und von dort über den vorgesehenen externen Port, beispielsweise Port 31, zur Koppeleinheit 20 gesendet. Sendet Teilnehmer 36 zur gleichen Zeit, also während der echtzeitkritischen Kommunikation, nicht echtzeitkritische Daten, beispielsweise für eine Internetabfrage, über die Datenverbindung 33, so werden diese vom Steuerwerk 27 über den externen Port 37 empfangen und über die interne Verbindung 29 an den lokalen Speicher 25 weitergeleitet und dort zwischengespeichert. Von dort werden sie erst im Bereich für die nicht echtzeitkritische Kommunikation wieder abgeholt und an den Empfänger weitergeleitet, d. h. sie werden in den zweiten Bereich des Übertragungszyklus, der für die spontane, nicht echtzeitkritische Kommunikation vorbehalten ist, verschoben, wodurch Störungen der Echtzeitkommunikation ausgeschlossen werden. Für den Fall, dass nicht alle zwischengespeicherten, nicht echtzeitkritischen Daten während des, für die Übertragung der nicht echtzeitkritischen Daten vorgesehenen Bereichs eines Übertragungszyklus übertragen werden können, werden sie im lokalen Speicher 25 der Koppeleinheit 21 solange zwischengespeichert, bis sie während eines, für die Übertragung der nicht echtzeitkritischen Daten vorgesehenen Bereichs eines späteren Übertragungszyklus übertragen werden können, wodurch Störungen der Echtzeitkommunikation in jedem Fall ausgeschlossen werden.

Die echtzeitkritischen Datentelegramme, die über Datenverbindung 32 über den externen Port 30 beim Steuerwerk 26 der Koppeleinheit 20 eintreffen, werden unmittelbar über die entsprechenden externen Ports weitergeleitet. Dies ist möglich, da die Echtzeitkommunikation im Voraus geplant ist und deshalb für alle zu übertragenden, echtzeitkritischen Datentelegramme Sende- und Empfangszeitpunkt, alle jeweils beteiligten Koppeleinheiten sowie alle Zeitpunkte für die Weiterleitung und alle Empfänger der echtzeitkritischen Datentelegramme bekannt sind, d. h. es ist beispielsweise beim Steuerwerk 26 der Koppeleinheit 20 vermerkt, dass die zum Zeitpunkt X ankommenden echtzeitkritischen Datentelegramme über den externen Port 38 an die nächste Koppeleinheit weitergesendet werden sollen. Durch die im Voraus erfolgte Planung der Echtzeitkommunikation ist auch sichergestellt, dass es beispielsweise auf der Datenverbindung 34 ausgehend von Port 38 zu keinen Datenkollisionen kommt. Dasselbe gilt natürlich für alle anderen Datenverbindungen, bzw. Ports während der Echtzeitkommunikation. Die Weiterleitungszeitpunkte aller echtzeitkritischen Datenpakete von den jeweils beteiligten Koppeleinheiten sind ebenfalls vorher geplant und damit eindeutig festgelegt. Das Ankommen der echtzeitkritischen Datentelegrammen beispielsweise im Steuerwerk 26 der Koppeleinheit 20 ist deshalb so geplant, dass die betrachteten, echtzeitkritischen Datentelegramme spätestens zum Weiterleitungszeitpunkt oder früher im Steuerwerk 26 der Koppeleinheit 20 ankommen. Damit ist das Problem von Zeitunschärfen, die sich insbesondere bei langen Übertragungsketten bemerkbar machen, eliminiert. Daten die beispielsweise für den Teilnehmer 18 bestimmt sind und im lokalen Speicher 24 der Koppeleinheit 20 zwischengespeichert wurden, werden von diesem zu gegebener Zeit abgeholt, echtzeitkritische Daten zu den vorher festgelegten Zeitpunkten und nicht echtzeitkritische Daten während des dafür vorgesehenen Bereichs.

Wie oben ausgeführt ist folglich ein gleichzeitiger Betrieb von echtzeitkritischer und nicht echtzeitkritischer Kommunikation im selben schaltbaren Datennetz, sowie ein beliebiger Anschluss von zusätzlichen Teilnehmern an das schaltbare Datennetz möglich, ohne die Echtzeitkommunikation selbst störend zu beeinflussen.

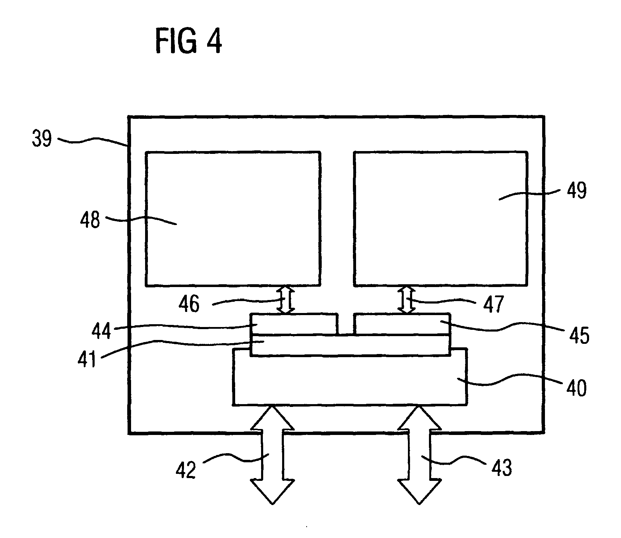

Figur 4 zeigt eine schematische Darstellung der Schnittstellen zwischen einem lokalen Teilnehmer und einer Koppeleinheit. Die Koppeleinheit 40 ist gemäß der offenbarten Erfindung in den Teilnehmer 39, beispielsweise ein Steuerrechner 1 eines Automatisierungssystems, integriert. Der Teilnehmer 39 nimmt sowohl an der echtzeitkritischen als auch an der nicht echtzeitkritischen Kommunikation teil, deshalb sind echtzeitkritische Applikationen 48, beispielsweise zur Steuerung von Antrieben eines Automatisierungssystems, und nicht echtzeitkritische Applikationen 49, beispielsweise Browser zur spontanen Internetkommunikation oder Textverarbeitungsprogramme, auf dem Teilnehmer 39 installiert. Aus Gründen der Übersichtlichkeit werden nur logische und keine physikalischen Verbindungen, insbesondere Datenverbindungen dargestellt. Die Kommunikation zwischen Teilnehmer 39 und integrierter Koppeleinheit 40 erfolgt über den lokalen Speicher 41, in dem die entsprechenden Daten, die vom Teilnehmer 39 gesendet werden, bzw. für den Teilnehmer 39 bestimmt sind, zwischengespeichert werden. Auf den lokalen Speicher 41 muß sowohl der Teilnehmer 39 als auch die Koppeleinheit 40 zugreifen können, der physikalische Ort des lokalen Speichers 41, der im gezeigten Ausführungsbeispiel beispielsweise Teil der Koppeleinheit 40 ist, ist dabei nicht von Bedeutung. Um die Trennung zwischen echtzeitkritischer und nicht echtzeitkritischer Kommunikation und damit eine störungsfreie Echtzeitkommunikation zu gewährleisten, sind zwei getrennte Zugänge zum Teilnehmer 39 erforderlich, wobei ein Zugang für den Austausch von echtzeitkritischen Daten und der andere Zugang für den Austausch von nicht echtzeitkritischen Daten vorgesehen ist. Die physikalische Kommunikation erfolgt infolgedessen über zwei getrennte logische Schnittstellen 42 und 43, zwischen dem aus Gründen der Übersichtlichkeit nicht dargestellten Datennetz und der Koppeleinheit 40, und den logisch getrennten Kommunikationskanäle 46 und 47 zwischen dem Speicher 41, also der Koppeleinheit 40, und dem Teilnehmer 39. Die Schnittstelle 42 und der Kommunikationskanal 46 charakterisieren dabei die Kommunikationskanäle für die echtzeitkritische, die Schnittstelle 43 und der Kommunikationskanal 47 die Kommunikationskanäle für die nicht echtzeitkritische Kommunikation. Die zwei jeweils dargestellten, logisch voneinander getrennten Schnittstellen 42 bzw. 43 und die Kommunikationskanäle 46 bzw. 47 sind physikalisch gesehen jedoch jeweils der gleiche Kommunikationskanal, der zur Übermittlung der jeweiligen Daten in beiden Richtungen benutzt wird. Insbesondere erfolgt die getrennte Signalisierung welche Art von Daten vorliegen und abgeholt werden können über die beiden logisch voneinander getrennten Kommunikationskanäle 46 und 47, wobei über Kommunikationskanal 46 die Bereitstellung von echtzeitkritischen Daten für die echtzeitkritischen Applikationen 48 und über Kommunikationskanal 47 die Bereitstellung von nicht echtzeitkritischen Daten für die nicht echtzeitkritischen Applikationen 49 signalisiert wird. Damit können Treiber 44 und die echtzeitkritischen Applikationen 48 mit einer höheren Priorität bearbeitet werden als Treiber 45 und die nicht echtzeitkritischen Applikationen 49. Damit kann auch im Teilnehmer 39 die echtzeitfähige Verarbeitung der echtzeitkritischen Daten garantiert werden. Die Trennung der echtzeitkritischen und der nicht echtzeitkritischen Kommunikation, die für die Gewährleistung der Echtzeitkommunikation notwendig ist, hat zudem den Vorteil, dass für die nicht echtzeitkritische Kommunikation bestehende Programme, insbesondere existierende Treiber, ohne Einschränkung verwendet werden können, wodurch einerseits keine teuren Neuentwicklungen notwendig sind und andererseits die weitere Evolution der nicht echtzeitkritischen Standardkommunikation keinen Einfluß auf die Echtzeitkommunikation selbst hat und deshalb ohne Einschränkung in die offenbarte Erfindung einbezogen werden kann.

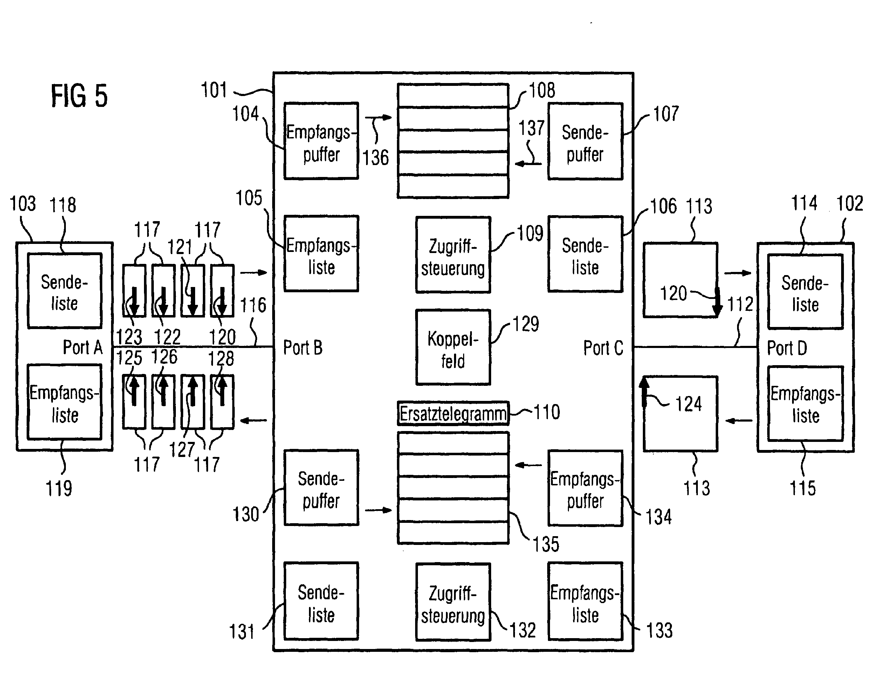

Die Figur 5 zeigt einen elektronischen Schaltkreis 101, der als Kommunikationsschnittstelle zwischen einer Kommunikationsverbindung 112 zu einer Koppeleinheit 102 und einer Kommunikationsverbindung 116 zu einer Koppeleinheit 103 dient. Im Folgenden werden der elektronische Schaltkreis einer Koppeleinheit, die damit realisierte Kommunikationsschnittstelle und die Koppeleinheit häufig ihrer Funktion entsprechend als Koppelknoten bezeichnet.

Der Koppelknoten 101 hat die beiden Kommunikationsports Port B und Port C.

Dem Port B ist eine Empfangsliste 105 zugeordnet. Die Empfangsliste 105 bestimmt die von verschiedenen weiteren Knoten des Kommunikationssystems zu verschiedenen Zeitpunkten an den Port B zu empfangenden Datentelegramme. Die Art, der Zeitpunkt und der Adressat der Datentelegramme sind also im Voraus bestimmt; es ändern sich lediglich die mit den Datentelegrammen jeweils transportierten Nutzdaten.

Dem Port B ist ferner ein Empfangspuffer 104 zugeordnet. Der Empfangspuffer dient als Pufferspeicher für den vollständigen Empfang von zumindest einem Datentelegramm. Dazu hat der Empfangspuffer 104 eine Größe, die zumindest zur Aufnahme eines einzelnen Datentelegramms maximaler Länge ausreicht.

Der Port C hat eine Sendeliste 106, die in dem deterministischen Kommunikationssystem bestimmt, zu welchen Zeitpunkten welche Datentelegramme an welchen Empfänger von dem Koppelknoten 101 an dessen Port C zu senden sind. Dem Port C ist ein Sendepuffer 107 zugeordnet, der zur Pufferung eines zu sendenden Datentelegramms dient. Ähnlich wie der Empfangspuffer 104 muss auch der Sendepuffer 107 eine Größe haben, die zumindest zur Aufnahme eines Datentelegramms einer vorgegebenen maximalen Telegrammlänge ausreicht.

Zwischen dem Empfangspuffer 104 und dem Sendepuffer 107 befindet sich ein Zwischenspeicher 108. der Zwischenspeicher 108 dient zur Zwischenspeicherung von vollständig empfangenen Datentelegrammen. Sowohl der Empfangspuffer 104 als auch der Sendepuffer 107 können auf den Zwischenspeicher 108 zugreifen, wobei die entsprechenden Zugriffe durch eine Zugriffssteuerung 109, einen so genannten Arbiter, gesteuert werden.

Sobald ein Datentelegramm vollständig in dem Empfangspuffer 104 vorliegt, wird eine Anfrage an die Zugriffssteuerung 109 gestellt, um das in dem Empfangspuffer 104 vollständig vorliegende Datentelegramm in den Zwischenspeicher 108 zu kopieren. Der Zwischenspeicher 108 ist in verschiedene Speicherbereiche, beispielsweise zeilenweise, aufgeteilt. Die einzelnen Speicherbereiche werden durch einen Schreibzeiger 136 sowie einen Lesezeiger 137 identifiziert.

Die Speicherung des in dem Empfangspuffer 104 vollständig empfangenen Datentelegramms erfolgt dann in dem Speicherbereich des Zwischenspeichers 108, der durch die aktuelle Position des Schreibzeigers 136 identifiziert ist. Die Position des Schreibzeigers 136 wird nach der Schreiboperation in dem entsprechenden Speicherbereich inkrementiert, so dass der Schreibzeiger 136 dann auf den nächsten freien Speicherbereich zeigt.

Sobald der Lesezeiger 137 auf den Speicherbereich dieses zuvor abgespeicherten Datentelegramms zeigt, wird dieses aus dem Zwischenspeicher 108 in den Sendepuffer 107 geschoben, um von dort gemäß der Sendeliste 106 versendet zu werden. Nach dem Transfer des betreffenden Datentelegramms von dem Zwischenspeicher 108 in den Sendepuffer 107 wird die Position des Lesezeigers 137 entsprechend der abzuarbeitenden Sendeliste 106 inkrementiert.

Nach einer alternativen Ausführungsform beinhaltet die Sendeliste 106 für jedes zu sendende Element eine Adresse des Zwischenspeichers 108, aus dem das zu sendende Datentelegramm abzurufen ist. Entsprechend kann in dieser alternativen Ausführungsform auch die Kontrollstruktur der Empfangsliste für jedes zu empfangende Element eine Adresse des Zwischenspeichers 108 beinhalten, auf der ein entsprechendes vollständig empfangenes Datentelegramm zwischengespeichert werden soll.

Der Koppelknoten 101 ist mit dem Knoten 102 über eine Kommunikationsverbindung 112 verbunden. Bei der Kommunikationsverbindung 112 handelt es sich um eine niederperformante Verbindung mit einer relativ geringen Datenrate und einem relativ langen Übertragungszyklus 113, der auch als Rahmen oder "Frame" bezeichnet wird, mit drahtloser Datenübertraqung, beispielsweise über Funk.

Die Kommunikationsverbindung 112 verbindet den Port C mit einem Port D des Knotens 102. Dem Port D sind eine Sendeliste 114 und eine Empfangsliste 115 zugeordnet, die wiederum die deterministische Übertragung von Datentelegrammen über das Kommunikationssystem, das heißt, über die Kommunikationsverbindung 112 spezifizieren.

Entsprechend ist der Port B des Koppelknotens 101 mit einem Port A des Knotens 103 über eine Kommunikationsverbindung 116 verbunden, wobei es sich bei der Kommunikationsverbindung 116 um eine hochperformante Verbindung mit einer relativ hohen Datenrate und einem relativ kurzen Übertragungszyklus 117 handelt mit drahtgebundener Datenübertragung beispielsweise gemäß Fast Ethernet.

In dem Port A des Knotens 103 sind wiederum eine Sendeliste 118 und eine Empfangsliste 119 für die deterministische Übertragung von Datentelegrammen von bzw. zu dem Knoten 103 vorhanden.

Die Kommunikation über die Kommunikationsverbindungen 112 und 116 läuft in den zyklisch wiederholten Übertragungszyklen 113 bzw. 117 ab, die ihrerseits in Zeitschlitze unterteilt sein können. Während eines Übertragungszyklus 113 bzw. 117 werden die entsprechenden Empfangs- und Sendelisten abgearbeitet, wobei verschiedene Datentelegramme den betreffenden Zeitschlitzen in einem Übertragungszyklus zugeordnet werden.

In dem betrachteten Beispiel der Fig. 5 sind vier zeitlich aufeinanderfolgende Übertragungszyklen 117 gezeigt, in denen jeweils ein oder mehrere Datentelegramme übertragen werden. Der Übersichtlichkeit halber ist in der Fig. 5 für jeden Übertragungszyklus 117 nur ein Datentelegramm 120, 121, 122 bzw. 123 gezeigt.

Aufgrund des in dem Koppelknoten 101 zur Anwendung kommenden "Store-and-Forward" Verfahrens brauchen die Kommunikationsverbindungen 112 und 116 nicht miteinander synchronisiert zu sein, das heißt, der Beginn der Übertragungszyklen 113 und 117 kann eine Phasenverschiebung aufweisen. Ebenso kann die Länge der Übertragungszyklen 113 und 117 beliebig gewählt werden, das heißt, es gibt keine Beschränkung auf eine gleiche Länge oder ein ganzzahliges Vielfaches. Allerdings muss die maximale Telegrammlänge in dem deterministischen Kommunikationssystem so definiert sein, dass ein entsprechendes Datentelegramm in jedem Fall innerhalb eines Übertragungszyklus 113 oder 117 übertragen werden kann, um die Datenkonsistenz, insbesondere von Echtzeitdaten zu gewährleisten.

In einem zweiten Anwendungsfall wird von dem Knoten 102 gemäß dessen Sendeliste 114 ein Datentelegramm 124 in dem Übertragungszyklus 113 über die Kommunikationsverbindung 112 von dessen Port D an den Port C des Koppelknotens 101 gesendet. Das Datentelegramm 124 wird von dem Port C des Koppelknotens 101 gemäß dessen Empfangsliste 133 empfangen und in dem Empfangspuffer 134 zwischengespeichert.

Der Koppelknoten 101 sendet dann gemäß dessen Sendeliste 131 von dessen Port B in den nächsten Übertragungszyklen 117 die Datentelegramme 125, 126, 127 bzw. 128. Dies kann so erfolgen, da es sich bei den Datentelegramme 125 bis 128 jeweils um eine Kopie des Datentelegramms 124 handelt. Auf diese Art und Weise werden die Belange der Empfangsliste 119 erfüllt, die in jedem Datenschlitz des Übertragungszyklus 117 ein Datentelegramm erwartet.

Eine alternative Möglichkeit ist die Speicherung eines Ersatztelegramms in dem Speicher 110, welches keine Nutzinformation trägt. In diesem Fall ist nur eines der Datentelegramme 125 bis 128 eine Kopie des Datentelegramms 124, beispielsweise das Datentelegramm 125, während die weiteren Datentelegramme 126 bis 128 jeweils Kopien des Ersatztelegramms des Speichers 110 sind. Dieser Vorgang kann beispielsweise durch die Kontrolle der Steuerung 132 erfolgen.

Insgesamt ist es also so, dass bei einer n-fachen Sendung eines Datentelegramms von dem Knoten 103, beispielsweise einer vierfachen Sendung, dieses Datentelegramm von dem Knoten 101 an den Knoten 2 m-fach gesendet wird, wobei m < n ist, vorzugsweise m =1 wie in dem betrachteten Beispiel.

Andererseits wird bei einer n-fachen Sendung eines Datentelegramms über die niederperformante Kommunikationsverbindung 112 dieses Datentelegramm entweder m-fach wiederholt, das heißt, in dem betrachteten Beispiel erfolgt eine vierfache Wiederholung bei einer einmaligen Sendung, oder das gesendete Datentelegramm wird nur einmal gesendet und es erfolgt eine zusätzliche Sendung von m-1 Ersatztelegrammen.

Der Koppelknoten 101 hat ferner ein Koppelfeld 129 über welches in dem Koppelknoten 101 Kommunikationsverbindungen zwischen den Ports B und C sowie erforderlichenfalls weiterer in der Fig. 5 nicht gezeigter Ports des Koppelknotens 101 hergestellt werden können.

Der Koppelknoten 101 kann auch selbst integraler Bestandteil einer Automatisierungskomponente sein.

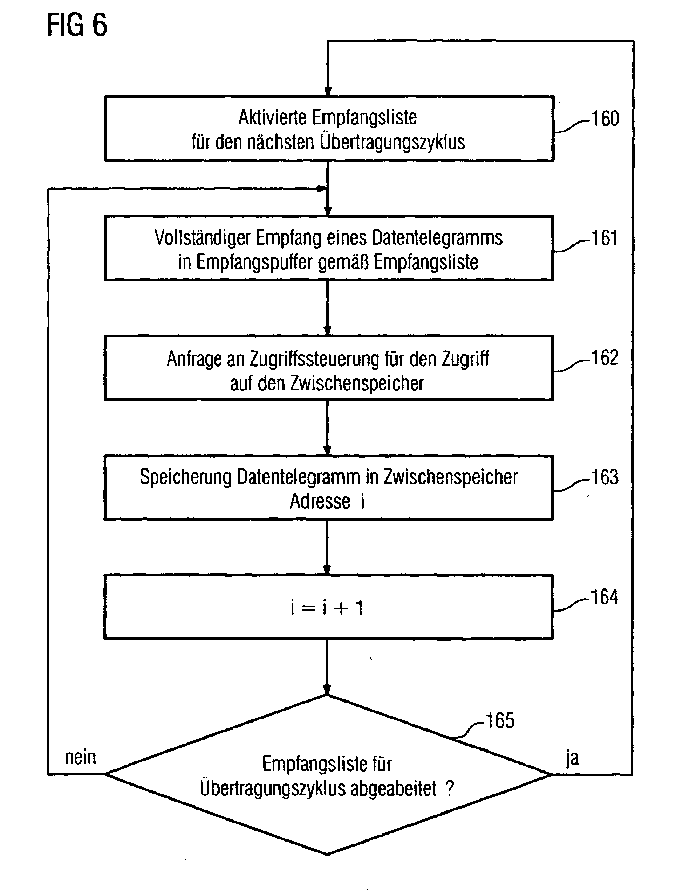

Die Fig. 6 zeigt ein entsprechendes Flussdiagramm für den Empfang eines Datentelegramms an einem Port das Koppelknotens. In dem Schritt 160 wird die Empfangsliste des betreffenden Ports für den nächsten Übertragungszyklus der betreffenden Kommunikationsverbindung aktiviert. In dem Schritt 161 erfolgt ein vollständiger Empfang eines Datentelegramms über die Kommunikationsverbindung gemäß der Empfangsliste. Dieses Datentelegramm wird in dem Empfangspuffer kurzzeitig zwischengepuffert.

In dem Schritt 162 erfolgt eine Anfrage an die Zugriffssteuerung für den Zugriff auf den Zwischenspeicher. Nachdem die Zugriffssteuerung ein entsprechendes Signal abgegeben hat, wird in dem Schritt 163 das betreffende Datentelegramm in dem Zwischenspeicher in einem Speicherbereich mit der Adresse i gespeichert. Die Adresse i wird dabei durch einen Schreibzeiger des Zwischenspeichers identifiziert.

Diese Adresse i wird in dem Schritt 164 inkrementiert, so dass der Schreibzeiger auf den nächstfolgenden freien Speicherbereich des Zwischenspeichers zeigt. Dabei kann es auch zu einem so genannten "Roll-Over" kommen.

Wenn die Empfangsliste mit dem Empfang dieses Datentelegramms für diesen Übertragungszyklus bereits abgearbeitet ist, geht die Ablaufsteuerung zu dem Schritt 160 zurück, um die Empfangsliste für den nächsten Übertragungszyklus zu aktivieren. Im gegenteiligen Fall geht die Ablaufsteuerung von dem Entscheidungsschritt 165 zu dem Schritt 161 zurück, um nachfolgende Datentelegramme gemäß derselben Empfangsliste in dem aktuellen Übertragungszyklus zu empfangen.

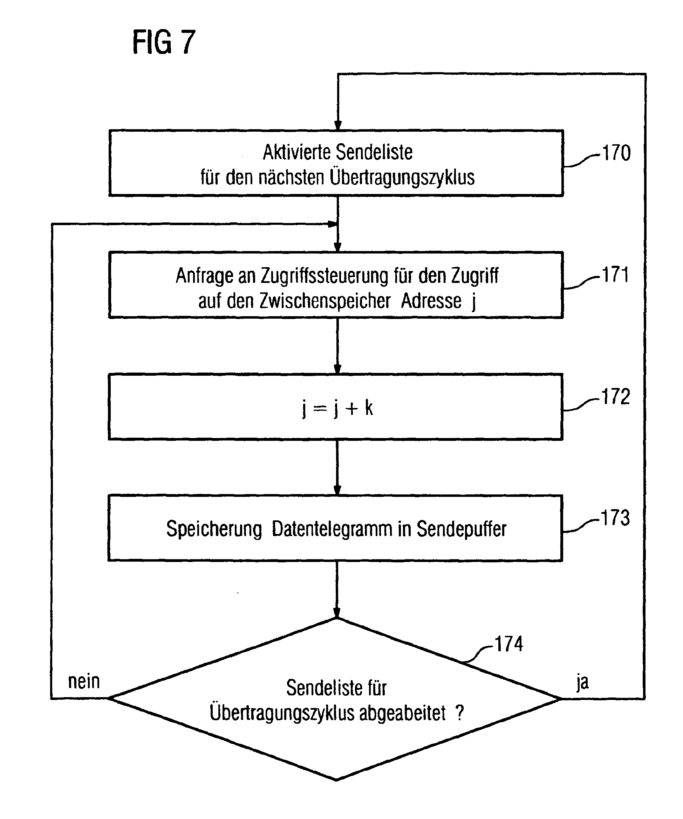

Die Fig. 7 zeigt die entsprechende Situation für die Sendung von einem anderen Port des Koppelknotens. Zunächst wird in dem Schritt 170 die entsprechende Sendeliste für den nächsten Übertragungszyklus aktiviert. In dem Schritt 171 erfolgt eine Anfrage an die Zugriffssteuerung für den Zugriff auf den Zwischenspeicher, um das nächste zu sendende Datentelegramm in den Sendepuffer zu transferieren und es von dort zu versenden. Der betreffende Speicherbereich der Adresse j des Zwischenspeichers wird dabei durch einen Lesezeiger des Zwischenspeichers identifiziert. Nachdem die Zugriffssteuerung durch ein entsprechendes Signal den Zugriff auf den Speicherbereich mit der Adresse j des Zwischenspeichers frei gegeben hat, wird der Lesezeiger in dem Schritt 172 um einen Betrag k inkrementiert und das Datentelegramm in dem Schritt 173 in den Sendepuffer transferiert.

Der Betrag k, um den der Lesezeiger inkrementiert wird, wird dabei durch die Sendeliste definiert. Die Zugriffssteuerung stellt dabei sicher, dass der Lesezeiger den Schreibzeiger nicht überholt und umgekehrt.

Von dem nachfolgenden Schritt 174 erfolgt dann eine Verzweigung zurück zu dem Schritt 170, wenn mit der Sendung des Datentelegramms die Sendeliste für den aktuellen Übertragungszyklus bereits abgearbeitet worden ist. Ist das Gegenteil der Fall, so erfolgt eine Verzweigung zu dem Schritt 171, um noch weitere Datentelegramme gemäß der Sendeliste in dem aktuellen Übertragungszyklus abzusenden.

Zusammenfassend betrifft die Erfindung ein System und ein Verfahren, das sowohl eine echtzeitkritische als auch eine nicht echtzeitkritische Kommunikation in einem heterogenen schaltbaren Datennetz, bestehend aus Teilnehmern und Koppeleinheiten, beispielsweise eines verteilten Automatisierungssystems durch einen zyklischen Betrieb ermöglicht. In einem sogenannten Übertragungszyklus (12) existiert für alle Teilnehmer und Koppeleinheiten des schaltbaren Datennetzes jeweils wenigstens ein Bereich (13) zur Übermittlung echtzeitkritischer und wenigstens ein Bereich (14) zur Übermittlung nicht echtzeitkritischer Daten, wodurch die echtzeitkritische von der nicht echtzeitkritischen Kommunikation getrennt wird. Da alle Teilnehmer und Koppeleinheiten immer auf eine gemeinsame Zeitbasis synchronisiert sind, finden die jeweiligen Bereiche zur Übermittlung von Daten für alle Teilnehmer und Koppeleinheiten jeweils zum selben Zeitpunkt statt, d. h. die echtzeitkritische Kommunikation findet zeitlich unabhängig von der nicht echtzeitkritischen Kommunikation statt und wird deshalb nicht von dieser beeinflusst. Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den, für die nicht echtzeitkritische Kommunikation vorgesehenen Übertragungsbereich (14) eines Übertragungszyklus (12) verschoben und auch nur dort übertragen wird.

## Patentansprüche

1. Verfahren zur Übertragung von Daten über schaltbare Datennetze, insbesondere Ethernet im Bereich industrieller Anlagen, bei dem echtzeitkritische und nicht echtzeitkritische Daten übertragen werden, wobei die Daten in wenigstens einem Übertragungszyklus (12) mit einstellbarer Zeitdauer (17) übertragen werden, jeder Übertragungszyklus (12) in wenigstens einen ersten Bereich (13) zur Übertragung von echtzeitkritischen Daten zur Echtzeitsteuerung und wenigstens einen zweiten Bereich (14) zur Übertragung von nicht echtzeitkritischen Daten unterteilt ist, wobei eine Koppeleinheit, welche zur Verbindung einer ersten Übertragungsstrecke mit drahtloser Datenübertragung und einer zweiten Übertragungsstrecke mit drahtgebundener Datenübertragung vorgesehen wird, zur Herstellung einer Kommunikationsschnittstelle zwischen einer ersten Kommunikationsverbindung auf der ersten Übertragungsstrecke mit einem ersten Übertragungszyklus einer ersten Länge und einer zweiten Kommunikationsverbindung auf der zweiten Übertragungsstrecke mit einem zweiten Übertragungszyklus einer zweiten Länge, wobei die erste und zweite Kommunikationsverbindung eine Äquidistanzeigenschaft mit einem zyklisch in äquidistanten Kommunikationszyklen erfolgenden Datenaustausch aufweisen, folgende Schritte durchführt:
- vollständiger Empfang eines Datentelegramms gemäß einer dem ersten Übertragungszyklus zugeordneten Empfangsliste,
- Zwischenspeichern des vollständig empfangenen Datentelegramms,
- Senden des Datentelegramms gemäß einer dem zweiten Übertragungszyklus zugeordneten Sendeliste.

2. Verfahren nach Anspruch 1, **dadurch gekennzeichnet, dass** jedem Teilnehmer eine Koppeleinheit zugeordnet wird, durch welche die zu übertragenden Daten gesendet und/oder empfangen und/oder weitergeleitet werden.

3. Verfahren nach Anspruch 1 oder 2, bei dem in dem ersten Übertragungszyklus empfangene Datentelegramme in aufeinanderfolgenden Speicherbereichen des Zwischenspeichers abgelegt werden.

4. Verfahren nach einem der vorhergehenden Ansprüche, bei dem in dem zweiten Übertragungszyklus zu sendende Datentelegramme aus dem Zwischenspeicher ausgelesen werden, wobei die jeweiligen Speicherbereiche voneinander durch einen Offset getrennt werden.

5. Verfahren nach einem der vorhergehenden Ansprüche, bei dem durch eine Zugriffssteuerung verhindert wird, dass während einer logischen Zeiteinheit ein Zugriff auf denselben Speicherbereich für die Zwischenspeicherung eines vollständig empfangenen Datentelegramms und dessen Sendung erfolgt.

6. Verfahren nach einem der vorhergehenden Ansprüche, bei dem die erste Kommunikationsverbindung und die zweite Kommunikationsverbindung unterschiedliche Übertragungsraten aufweisen und/oder der erste und der zweite Übertragungszyklus asynchron sind und/oder die erste und die zweite Länge gleich oder ungleich sind.

7. Verfahren nach einem der vorhergehenden Ansprüche, bei dem ein Datentelegramm von einem ersten Teilnehmer der ersten Kommunikationsverbindung innerhalb des ersten Übertragungszyklus empfangen wird und das Datentelegramm m-fach innerhalb von m aufeinanderfolgenden Übertragungszyklen an einen zweiten Teilnehmer der zweiten Kommunikationsverbindung gesendet wird.

8. Verfahren nach Anspruch 7, bei dem das Datentelegramm nur einmal in dem zweiten Übertragungszyklus gesendet wird und ein Ersatzdatentelegramm m-l-fach in nachfolgenden zweiten Übertragungszyklen gesendet wird.

9. Verfahren nach einem der vorhergehenden Ansprüche, bei dem im Datentelegramm Echtzeitdaten übertragen werden.

10. Verfahren nach einem der vorhergehenden Ansprüche, wobei als erste und zweite Kommunikationsverbindung jeweils industrielles Ethernet, insbesondere isochrones Realtime Ethernet oder Realtime Fast Ethernet verwendet werden.

11. Verfahren nach einem der vorhergehenden Ansprüche, wobei mehrere Ein- und/oder Ausgangsports, denen jeweils eine Empfangs- und/oder Sendeliste zugeordnet ist, über ein Koppelfeld gekoppelt werden.

12. Verfahren nach einem der vorhergehenden Ansprüche, bei dem phasengleiche erste und zweite Übertragungszyklen verwendet werden.

13. Verfahren nach einem der vorhergehenden Ansprüche, **dadurch gekennzeichnet , dass** alle Teilnehmer und Koppeleinheiten des schaltbaren Datennetzes durch Zeitsynchronisation untereinander stets eine gemeinsame synchrone Zeitbasis aufweisen.

14. Verfahren nach einem der vorstehenden Ansprüche, **dadurch gekennzeichnet , dass** alle nicht echtzeitkritischen Daten, die während des für die echtzeitkritische Kommunikation vorgesehenen Bereichs (13) eines Übertragungszyklus (12) übertragen werden sollen, von der jeweiligen Koppeleinheit zwischengespeichert und während des für die nicht echtzeitkritische Kommunikation vorgesehenen Bereichs (14) dieses oder eines folgenden Übertragungszyklus übertragen werden.

15. Verfahren nach einem der vorstehenden Ansprüche, **dadurch gekennzeichnet , dass** alle nicht echtzeitkritischen Daten, die während des für die Übertragung der nicht echtzeitkritischen Daten vorgesehenen Bereichs (14) eines Übertragungszyklus (12) nicht übertragen werden können, von der jeweiligen Koppeleinheit zwischengespeichert und während des für die Übertragung der nicht echtzeitkritischen Daten vorgesehenen Bereichs (14) eines späteren Übertragungszyklus übertragen werden.

16. Verfahren nach einem der vorstehenden Ansprüche, **dadurch gekennzeichnet , dass** die Zeitdauer des Bereichs (14) zur Übertragung von nicht echtzeitkritischen Daten innerhalb eines Übertragungszyklus (12) automatisch durch die Zeitdauer des Bereichs (13) zur Übertragung von echtzeitkritischen Daten festgelegt wird.

17. Verfahren nach einem der vorstehenden Ansprüche, **dadurch gekennzeichnet , dass** die Zeitdauer des Bereichs (13) zur Übertragung von echtzeitkritischen Daten innerhalb eines Übertragungszyklus (12) jeweils durch die verbindungsspezifisch zu übertragenden Daten bestimmt wird.

18. Verfahren nach einem der vorstehenden Ansprüche, **dadurch gekennzeichnet , dass** die Zeitdauer (17) eines Übertragungszyklus (12) wenigstens einmal vor der jeweiligen Durchführung der Datenübertragung festgelegt wird.

19. Verfahren nach einem der vorstehenden Ansprüche, **dadurch gekennzeichnet , dass** die Zeitdauer (17) eines Übertragungszyklus (12) und/oder die Zeitdauer des Bereichs (13) zur Übertragung von echtzeitkritischen Daten eines Übertragungszyklus (12) verändert werden kann.

20. Verfahren nach einem der vorstehenden Ansprüche, **dadurch gekennzeichnet , dass** ein Übertragungszyklus (12) mit einer Zeitdauer (17) zwischen 1 Mikrosekunde und 10 Sekunden verwendet wird.

21. Verfahren nach einem der vorstehenden Ansprüche, **dadurch gekennzeichnet , dass** Neuplanungen der Echtzeitkommunikation jederzeit im laufenden Betrieb eines Automatisierungssystems durchgeführt werden können.

22. Verfahren nach einem der vorstehenden Ansprüche, **dadurch gekennzeichnet , dass** die Zeitdauer (17) eines Übertragungszyklus (12) durch Neuplanung der Echtzeitkommunikation verändert werden kann.

23. Verfahren nach einem der vorstehenden Ansprüche, **dadurch gekennzeichnet , dass** ein Teil des für die Übertragung der echtzeitkritischen Daten vorgesehenen Bereichs (13) des Übertragungszyklus (12) für die Übertragung von Daten zur Organisation der Datenübertragung (15) vorgesehen ist.

24. Verfahren nach einem der vorstehenden Ansprüche, **dadurch gekennzeichnet , dass** die Daten zur Organisation der Datenübertragung (15) am Anfang des Bereichs (13) zur Übertragung echtzeitkritischer Daten des Übertragungszyklus (12) übertragen werden.

25. Verfahren nach einem der vorstehenden Ansprüche, **dadurch gekennzeichnet , dass** die Daten zur Organisation der Datenübertragung (15) Daten zur Zeitsynchronisation der Teilnehmer und Koppeleinheiten des Datennetzes und/oder Daten zur Topologieerkennung des Netzwerks enthalten.

26. Verfahren nach einem der vorstehenden Ansprüche, **dadurch gekennzeichnet , dass** für alle zu übertragenden, echtzeitkritischen Datentelegramme Sende- und Empfangszeitpunkt bei Sender und/oder Empfänger vor Beginn der jeweiligen Durchführung der Datenübertragung vermerkt sind.

27. Verfahren nach einem der vorstehenden Ansprüche, **dadurch gekennzeichnet , dass** für alle zu übertragenden, echtzeitkritischen Datentelegramme in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt sind.

28. Verfahren nach einem der vorstehenden Ansprüche, **dadurch gekennzeichnet , dass** jedes echtzeitkritische Datentelegramm spätestens zum Weiterleitungszeitpunkt oder früher bei der entsprechenden Koppeleinheit ankommt.

29. Verfahren nach einem der vorstehenden Ansprüche, **dadurch gekennzeichnet , dass** die echtzeitkritischen Datentelegramme unmittelbar, ohne zeitlichen Zwischenraum gesendet bzw. weitergeleitet werden.

30. Verfahren nach einem der vorstehenden Ansprüche, **dadurch gekennzeichnet , dass** Verbindungsstrecken eines schaltbaren Datennetzes, die für die nicht echtzeitkritische Kommunikation verboten sind, bei der echtzeitkritischen Kommunikation benutzt werden.

31. Verfahren nach einem der vorstehenden Ansprüche, **dadurch gekennzeichnet , dass** wenigstens ein Teilnehmer eines schaltbaren Datennetzes eine echtzeitkritische Kommunikation und/oder eine nicht echtzeitkritische Kommunikation, insbesondere Internetkommunikation, parallel im selben schaltbaren Datennetz durchführen kann, wobei die stattfindende nicht echtzeitkritische Kommunikation die parallel stattfindende echtzeitkritische Kommunikation nicht beeinflusst.

32. Verfahren nach einem der vorstehenden Ansprüche, **dadurch gekennzeichnet , dass** wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann.

33. System zur Übertragung von Daten über schaltbare Datennetze, insbesondere Ethernet im Bereich industrieller Anlagen, mit mindestens einer mit einem schaltbaren Datennetz koppelbaren Datenverarbeitungsvorrichtung, über welches echtzeitkritische und nicht echtzeitkritische Daten übertragbar sind, wobei das System Mittel zur Übertragung von Daten in wenigstens einem Übertragungszyklus (12) mit einstellbarer Zeitdauer (17) aufweist, jeder Übertragungszyklus (12) in wenigstens einen ersten Bereich (13) zur Übertragung von echtzeitkritischen Daten zur Echtzeitsteuerung und wenigstens einen zweiten Bereich (14) zur Übertragung von nicht echtzeitkritischen Daten unterteilt ist, wobei das System eine Koppeleinheit mit einem elektronischen Schaltkreis für eine skalierbare Kommunikationsschnittstelle aufweist, wobei die Koppeleinheit zur Verbindung einer ersten Übertragungsstrecke mit drahtloser Datenübertragung und einer zweiten Übertragungsstrecke mit drahtgebundener Datenübertragung vorgesehen ist, wobei die Kommunikationsschnittstelle zwischen einer ersten Kommunikationsverbindung (116) auf der ersten Übertragungsstrecke mit einem ersten Übertragungszyklus (117) einer ersten Länge und einer zweiten Kommunikationsverbindung (112) auf der zweiten Übertragungsstrecke mit einem zweiten Übertragungszyklus (113) einer zweiten Länge gebildet ist, mit einer Empfangsliste (105, 115, 119, 133) für den ersten Übertragungszyklus und einer Sendeliste (106, 114, 118, 131) für den zweiten Übertragungszyklus, wobei ein gemäß der Empfangsliste empfangenes Datentelegramm (120, 121, 122, 123, 124, 125, 126, 127, 128) einem Element der Sendeliste zugeordnet ist, und mit einem Empfangspuffer (104, 134), einem Sendepuffer (107, 130) und einem Zwischenspeicher (108) für gemäß der Empfangsliste vollständig empfangene Datentelegramme und gemäß der Sendeliste zu sendende Datentelegramme, wobei sowohl der Empfangspuffer als auch der Sendepuffer mit dem Zwischenspeicher verbindbar sind und wobei die erste und zweite Kommunikationsverbindung eine Äquidistanzeigenschaft aufweisen.

34. System nach Anspruch 33, **dadurch gekennzeichnet, dass** in dem System jedem Teilnehmer eine Koppeleinheit zugeordnet ist, die zum Senden und/oder zum Empfangen und/oder zur Weiterleitung der zu übertragenden Daten vorgesehen ist.

35. System nach Anspruch 33 oder 34 mit einer Zugriffssteuerung (109, 132) im elektronischen Schaltkreis für die Steuerung von Zugriffen der Sende- und Empfangspuffer auf den Zwischenspeicher.

36. System nach einem der Ansprüche 33 bis 35, bei dem in dem ersten Übertragungszyklus empfangene Datentelegramme in aufeinanderfolgenden Speicherbereichen des Zwischenspeichers abgelegt werden und mit einem Empfangszeiger (136) auf den jeweils nächsten freien Speicherbereich für die Zwischenspeicherung eines vollständig empfangen Datentelegramms.

37. System nach einem der vorhergehenden Ansprüche 33 bis 36, wobei die erste und die zweite Kommunikationsverbindung unterschiedliche Übertragungsraten haben und asynchron sind.

38. System nach einem der vorhergehenden Ansprüche 33 bis 37, wobei die ersten und die zweiten Übertragungszyklen synchron sind und die ersten und zweiten Längen gleich sind oder ein ganzzahliges Vielfaches voneinander betragen.

39. System nach einem der vorhergehenden Ansprüche 33 bis 38, bei dem die Sendeliste zum m-fachen Absenden eines Datentelegramms innerhalb von m aufeinanderfolgenden Übertragungszyklen ausgebildet ist, nachdem das Datentelegramm n-fach innerhalb des ersten Übertragungszyklus gemäß der Empfangsliste empfangen worden ist.

40. System nach Anspruch 39, bei dem das Datentelegramm gemäß der Sendeliste nur einmal gesendet wird und dass zusätzlich eine Anzahl von m-1 Ersatzdatentelegrammen gemäß der Sendeliste in dem zweiten Übertragungszyklus gesendet werden.

41. System nach einem der vorhergehenden Ansprüche 33 bis 40, bei dem die erste und/oder die zweite Kommunikationsverbindung bidirektional sind und jeder der bidirektionalen Kommunikationsverbindungen jeweils eine Sendeliste und eine Empfangsliste zugeordnet sind.

42. System nach einem der vorhergehenden Ansprüche 33 bis 41, bei dem es sich bei dem Datentelegramm um Echtzeitdaten handelt.

43. System nach einem der vorhergehenden Ansprüche 33 bis 42 mit mehreren Eingangs- und/oder Ausgangsports im elektronischen Schaltkreis, denen jeweils eine Empfangs- und/oder Sendeliste zugeordnet ist und mit einem Koppelfeld (129) zur Koppelung von einem der Ports mit einem oder mehreren der anderen Ports.

44. System nach einem der Ansprüche 33 bis 43, **dadurch gekennzeichnet , dass** das System zumindest ein Mittel aufweist, das alle Teilnehmer und Koppeleinheiten des schaltbaren Datennetzes durch Zeitsynchronisation untereinander stets mit einer gemeinsamen synchronen Zeitbasis versorgt.

45. System nach einem der Ansprüche 33 bis 44, **dadurch gekennzeichnet , dass** das System zumindest ein Mittel aufweist, das dafür sorgt, dass alle nicht echtzeitkritischen Daten, die während des für die echtzeitkritische Kommunikation vorgesehenen Bereichs (13) eines Übertragungszyklus (12) übertragen werden sollen, von der jeweiligen Koppeleinheit zwischengespeichert und während des für die nicht echtzeitkritische Kommunikation vorgesehenen Bereichs (14) dieses oder eines folgenden Übertragungszyklus übertragen werden.

46. System nach einem der Ansprüche 33 bis 45, **dadurch gekennzeichnet , dass** das System zumindest ein Mittel aufweist, das dafür sorgt, dass alle nicht echtzeitkritischen Daten, die während des für die Übertragung der nicht echtzeitkritischen Daten vorgesehenen Bereichs (14) eines Übertragungszyklus (12) nicht übertragen werden können, von der jeweiligen Koppeleinheit zwischengespeichert und während des für die Übertragung der nicht echtzeitkritischen Daten vorgesehenen Bereichs (14) eines späteren Übertragungszyklus übertragen werden.

47. System nach einem der Ansprüche 33 bis 46, **dadurch gekennzeichnet , dass** das System zumindest ein Mittel aufweist, das die Zeitdauer des Bereichs (14) zur Übertragung von nicht echtzeitkritischen Daten innerhalb eines Übertragungszyklus (12) automatisch durch die Zeitdauer des Bereichs (13) zur Übertragung von echtzeitkritischen Daten festlegt.

48. System nach einem der Ansprüche 33 bis 47, **dadurch gekennzeichnet , dass** das System zumindest ein Mittel aufweist, das die Zeitdauer des Bereichs (13) zur Übertragung von echtzeitkritischen Daten innerhalb eines Übertragungszyklus (12) jeweils durch die verbindungsspezifisch zu übertragenden Daten bestimmt.

49. System nach einem der Ansprüche 33 bis 48, **dadurch gekennzeichnet , dass** das System zumindest ein Mittel aufweist, das die Zeitdauer (17) eines Übertragungszyklus (12) wenigstens einmal vor der jeweiligen Durchführung der Datenübertragung festlegt.

50. System nach einem der Ansprüche 33 bis 49, **dadurch gekennzeichnet , dass** das System zumindest ein Mittel aufweist, das die Zeitdauer (17) eines Übertragungszyklus (12) und/oder die Zeitdauer des Bereichs (13) zur Übertragung von echtzeitkritischen Daten eines Übertragungszyklus (12) verändert.

51. System nach einem der Ansprüche 33 bis 50, **dadurch gekennzeichnet , dass** das System zumindest ein Mittel aufweist, das Neuplanungen der Echtzeitkommunikation jederzeit im laufenden Betrieb eines Automatisierungssystems durchführt.

52. System nach einem der Ansprüche 33 bis 51, **dadurch gekennzeichnet , dass** das System zumindest ein Mittel aufweist, das die Zeitdauer (17) eines Übertragungszyklus (12) durch Neuplanung der Echtzeitkommunikation verändert.

53. System nach einem der Ansprüche 33 bis 52, **dadurch gekennzeichnet , dass** das System zumindest ein Mittel aufweist, das einen Teil des für die Übertragung der echtzeitkritischen Daten vorgesehenen Bereichs (13) des Übertragungszyklus (12) für die Übertragung von Daten zur Organisation der Datenübertragung (15) vorsieht.

54. System nach einem der Ansprüche 33 bis 53, **dadurch gekennzeichnet , dass** das System zumindest ein Mittel aufweist, das die Daten zur Organisation der Datenübertragung (15) am Anfang des Bereichs (13) zur Übertragung der echtzeitkritischen Daten des Übertragungszyklus (12) überträgt.

55. System nach einem der Ansprüche 33 bis 54, **dadurch gekennzeichnet , dass** das System zumindest ein Mittel aufweist, das für alle zu übertragenden, echtzeitkritischen Datentelegramme Sende- und Empfangszeitpunkt bei Sender und/oder Empfänger vor Beginn der jeweiligen Durchführung der Datenübertragung vermerkt.

56. System nach einem der Ansprüche 33 bis 55, **dadurch gekennzeichnet , dass** das System zumindest ein Mittel aufweist, das für alle zu übertragenden, echtzeitkritischen Datentelegramme in allen jeweils beteiligten Koppeleinheiten alle Zeitpunkte für die Weiterleitung der echtzeitkritischen Datentelegramme sowie die jeweils zugehörigen Verbindungsstrecken, über die die echtzeitkritischen Datentelegramme weitergeleitet werden, vor Beginn der jeweiligen Durchführung der Datenübertragung vermerkt.

57. System nach einem der Ansprüche 33 bis 56, **dadurch gekennzeichnet , dass** das System zumindest ein Mittel aufweist, das dafür sorgt, dass jedes echtzeitkritische Datentelegramm spätestens zum Weiterleitungszeitpunkt oder früher bei der entsprechenden Koppeleinheit ankommt.

58. System nach einem der Ansprüche 33 bis 57, **dadurch gekennzeichnet , dass** das System zumindest ein Mittel aufweist, das die echtzeitkritischen Datentelegramme unmittelbar, ohne zeitlichen Zwischenraum sendet bzw. weiterleitet.

59. System nach einem der Ansprüche 33 bis 58, **dadurch gekennzeichnet , dass** das System zumindest ein Mittel aufweist, das dafür sorgt, dass Verbindungsstrecken eines schaltbaren Datennetzes, die für die nicht echtzeitkritische Kommunikation nicht benutzt werden dürfen, bei der echtzeitkritischen Kommunikation benutzt werden.

60. System nach einem der Ansprüche 33 bis 59, **dadurch gekennzeichnet , dass** eine Koppeleinheit in einen Teilnehmer integriert ist.

61. System nach einem der Ansprüche 33 bis 60, **dadurch gekennzeichnet , dass** eine Koppeleinheit zwei getrennte Zugänge zum jeweiligen Teilnehmer aufweist, wobei ein Zugang für den Austausch von echtzeitkritischen Daten und der andere Zugang für den Austausch von nicht echtzeitkritischen Daten vorgesehen ist.

62. System nach einem der Ansprüche 33 bis 61, **dadurch gekennzeichnet , dass** das System zumindest ein Mittel aufweist, das dafür sorgt, dass wenigstens ein Teilnehmer eines schaltbaren Datennetzes eine echtzeitkritische Kommunikation und/oder eine nicht echtzeitkritische Kommunikation, insbesondere Internetkommunikation, parallel im selben schaltbaren Datennetz durchführen kann, wobei die stattfindende nicht echtzeitkritische Kommunikation die parallel stattfindende echtzeitkritische Kommunikation nicht beeinflusst.

63. System nach einem der Ansprüche 33 bis 62, **dadurch gekennzeichnet , dass** das System zumindest ein Mittel aufweist, das dafür sorgt, dass wenigstens ein beliebiger Teilnehmer, insbesondere ein Teilnehmer mit der Fähigkeit zur offenen, internetfähigen Kommunikation, mit oder ohne zugeordnete Koppeleinheit, zu einem schaltbaren Datennetz hinzugefügt werden kann.

64. Koppeleinheit für ein System nach einem der Ansprüche 33 bis 63, **dadurch gekennzeichnet , dass** die Koppeleinheit zur Verbindung einer ersten Übertragungsstrecke mit drahtloser Datenübertragung und einer zweiten Übertragungsstrecke mit drahtgebundener Datenübertragung vorgesehen ist.

## Claims

1. Method for transmitting data via switchable data networks, particularly an Ethernet in the field of industrial installations, which involves real-time-critical and non-real-time-critical data being transmitted, where the data are transmitted in at least one transmission cycle (12) of settable duration (17), each transmission cycle (12) is divided into at least one first range (13) for transmitting real-time-critical data for real-time control and at least one second range (14) for transmitting non-real-time-critical data, where a switching unit which is provided for connecting a first transmission link with wireless data transmission and a second transmission link with wire-connected data transmission sets up a communication interface between a first communication link on the first transmission link with a first transmission cycle of a first length and a second communication link on the second transmission link with a second transmission cycle of a second length - the first and second communication links having an equidistance property with data interchange taking place cyclically in equidistant communication cycles - by carrying out the following steps:
- full reception of a data message on the basis of a reception list associated with the first transmission cycle,
- buffer-storage of the fully received data message,
- transmission of the data message on the basis of a transmission list associated with the second transmission cycle.

2. Method according to Claim 1, **characterized in that** each subscriber is allocated a switching unit which sends and/or receives and/or forwards the data which are to be transmitted.

3. Method according to Claim 1 or 2, in which data messages received in the first transmission cycle are stored in successive memory areas of the buffer store.

4. Method according to one of the preceding claims, in which data messages which are to be sent in the second transmission cycle are read from the buffer store, the respective memory areas being separated from one another by an offset.

5. Method according to one of the preceding claims, in which an access controller prevents the same memory area being accessed during a logical time unit in order to buffer-store a fully received data message and to send it.

6. Method according to one of the preceding claims, in which the first communication link and the second communication link have different transmission rates and/or the first and second transmission cycles are asynchronous and/or the first and second lengths are equal or unequal.

7. Method according to one of the preceding claims, in which a data message is received by a first subscriber on the first communication link within the first transmission cycle, and the data message is sent to a second subscriber on the second communication link m times within m successive transmission cycles.

8. Method according to Claim 7, in which the data message is sent only once in the second transmission cycle, and a substitute data message is sent m-1 times in successive second transmission cycles.

9. Method according to one of the preceding claims, in which the data message is used to transmit real-time data.

10. Method according to one of the preceding claims, where the first and second communication links used are respectively an Industrial Ethernet, particularly an isochronous Realtime Ethernet or Realtime Fast Ethernet.

11. Method according to one of the preceding claims, where a plurality of input and/or output ports which have a respective associated reception and/or transmission list are coupled by means of a switching matrix.

12. Method according to one of the preceding claims, in which in-phase first and second transmission cycles are used.

13. Method according to one of the preceding claims, **characterized in that** all subscribers and switching units in the switchable data network always have a common synchronous time base as a result of time synchronization among one another.

14. Method according to one of the preceding claims, **characterized in that** all non-real-time-critical data which are intended to be transmitted during the range (13) of a transmission cycle (12) which is provided for real-time-critical communication are buffer-stored by the respective switching unit and are transmitted during the range (14) of this or of a subsequent transmission cycle which is provided for non-real-time-critical communication.

15. Method according to one of the preceding claims, **characterized in that** all non-real-time-critical data which cannot be transmitted during the range (14) of a transmission cycle (12) which is provided for transmitting the non-real-time-critical data are buffer-stored by the respective switching unit and are transmitted during the range (14) of a later transmission cycle which is provided for transmitting the non-real-time-critical data.

16. Method according to one of the preceding claims, **characterized in that** the duration of the range (14) for transmitting non-real-time-critical data within a transmission cycle (12) is stipulated automatically by the duration of the range (13) for transmitting real-time-critical data.

17. Method according to one of the preceding claims, **characterized in that** the duration of the range (13) for transmitting real-time-critical data within a transmission cycle (12) is respectively determined by the data which are to be transmitted on a connection-specific basis.

18. Method according to one of the preceding claims, **characterized in that** the duration (17) of a transmission cycle (12) is stipulated at least once before the respective performance of the data transmission.

19. Method according to one of the preceding claims, **characterized in that** the duration (17) of a transmission cycle (12) and/or the duration of the range (13) for transmitting real-time-critical data in a transmission cycle (17) can be altered.

20. Method according to one of the preceding claims, **characterized in that** a transmission cycle (12) with a duration (17) of between 1 microsecond and 10 seconds is used.

21. Method according to one of the preceding claims, **characterized in that** the real-time communication can be rescheduled at any time in the course of operation of an automation system.

22. Method according to one of the preceding claims, **characterized in that** the duration (17) of a transmission cycle (12) can be altered by rescheduling the real-time communication.

23. Method according to one of the preceding claims, **characterized in that** a portion of the range (13) of the transmission cycle (12) which is provided for transmitting the real-time-critical data is provided for transmitting data for organizing the data transmission (15).

24. Method according to one of the preceding claims, **characterized in that** the data for organizing the data transmission (15) are transmitted at the start of the range (13) for transmitting real-time-critical data in the transmission cycle (12).

25. Method according to one of the preceding claims, **characterized in that** the data for organizing the data transmission (15) contain data for time synchronization of the subscribers and switching units in the data network and/or data for identifying the topology of the network.

26. Method according to one of the preceding claims, **characterized in that** for all real-time-critical data messages which are to be transmitted there is a record of the transmission and reception times at the transmitter and/or receiver before the start of the respective performance of the data transmission.

27. Method according to one of the preceding claims, **characterized in that** for all real-time-critical data messages which are to be transmitted all the respective switching units involved have a record of all the times for forwarding the real-time-critical data messages and also the respective associated links via which the real-time-critical data messages are forwarded before the start of the respective performance of the data transmission.

28. Method according to one of the preceding claims, **characterized in that** each real-time-critical data message arrives at the relevant switching unit no later than at the forwarding time or earlier.

29. Method according to one of the preceding claims, **characterized in that** the real-time-critical data messages are sent or forwarded directly, without any intervening time period.

30. Method according to one of the preceding claims, **characterized in that** links in a switchable data network which are prohibited for non-real-time-critical communication are used for real-time-critical communication.

31. Method according to one of the preceding claims, **characterized in that** at least one subscriber in the switchable data network can effect real-time-critical communication and/or non-real-time-critical communication, particularly Internet communication, in parallel in the same switchable data network, with the non-real-time-critical communication which takes place not influencing the real-time-critical communication which takes place in parallel.

32. Method according to one of the preceding claims, **characterized in that** at least one arbitrary subscriber, particularly a subscriber with the capability of open, Internet-compatible communication, with or without an associated switching unit, can be added to a switchable data network.

33. System for transmitting data via switchable data networks, particularly an Ethernet in the field of industrial installations, having at least one data processing apparatus which can be coupled to a switchable data network and which can be used to transmit real-time-critical and non-real-time-critical data, where the system has means for transmitting data in at least one transmission cycle (12) of settable duration (17), each transmission cycle (12) is divided into at least one first range (13) for transmitting real-time-critical data for real-time control and at least one second range (14) for transmitting non-real-time-critical data, where the system has a switching unit with an electronic circuit for a scaleable communication interface, where the switching unit is provided for connecting a first transmission link with wireless data transmission and a second transmission link with wire-connected data transmission, where the communication interface is formed between a first communication link (116) on the first transmission link with a first transmission cycle (117) of a first length and a second communication link (112) on the second transmission link with a second transmission cycle (113) of a second length, with a reception list (105, 115, 119, 133) for the first transmission cycle and a transmission list (106, 114, 118, 131) for the second transmission cycle, where a data message (120, 121, 122, 123, 124, 125, 126, 127, 128) received on the basis of the reception list is associated with an element on the transmission list, and with a reception buffer (104, 134), a transmission buffer (107, 130) and a buffer store (108) for data messages which have been fully received on the basis of the reception list and data messages which are to be transmitted on the basis of the transmission list, where both the reception buffer and the transmission buffer are able to be connected to the buffer store and where the first and second communication links have an equidistance property.

34. System according to Claim 33, **characterized in that** each subscriber in the system has an associated switching unit which is provided for sending and/or for receiving and/or for forwarding the data which are to be transmitted.

35. System according to Claim 33 or 34 with an access controller (109, 132) in the electronic circuit for controlling access to the buffer store by the transmission and reception buffers.

36. System according to one of Claims 33 to 35, in which data messages received in the first transmission cycle are stored in successive memory areas of the buffer store and having a reception pointer (136) to the respective next free memory area for buffer-storing a fully received data message.

37. System according to one of the preceding Claims 33 to 36, where the first and second communication links have different transmission rates and are asynchronous.

38. System according to one of the preceding Claims 33 to 37, where the first and second transmission cycles are synchronous and the first and second lengths are equal or are an integer multiple of one another.

39. System according to one of the preceding Claims 33 to 38, in which the transmission list is designed for sending a data message m times within m successive transmission cycles after the data message has been received n times within the first transmission cycle on the basis of the reception list.

40. System according to Claim 39, in which the data message is sent only once on the basis of the transmission list and additionally a number of m-1 substitute data messages are sent on the basis of the transmission list in the second transmission cycle.

41. System according to one of the preceding Claims 33 to 40, in which the first and/or the second communication link(s) are bidirectional and each of the bidirectional communication links has a respective associated transmission list and reception list.

42. System according to one of the preceding Claims 33 to 41, in which the data message is real-time data.

43. System according to one of the preceding Claims 33 to 42 with a plurality of input and/or output ports in the electronic circuit, each of which ports has an associated reception and/or transmission list, and with a switching matrix (129) for coupling one of the ports to one or more of the other ports.

44. System according to one of Claims 33 to 43, **characterized in that** the system has at least one means which always supplies all subscribers and switching units in the switchable data network with a common synchronous time base as a result of time synchronization among one another.

45. System according to one of Claims 33 to 44, **characterized in that** the system has at least one means which ensures that all non-real-time-critical data which are to be transmitted during the range (13) of a transmission cycle (12) which is provided for real-time-critical communication are buffer-stored by the respective switching unit and are transmitted during the range (14) of this or of a subsequent transmission cycle which is provided for non-real-time-critical communication.

46. System according to one of Claims 33 to 45, **characterized in that** the system has at least one means which ensures that all non-real-time-critical data which cannot be transmitted during the range (14) of the transmission cycle (12) which is provided for transmitting the non-real-time-critical data are buffer-stored by the respective switching unit and are transmitted during the range (14) of a later transmission cycle which is provided for transmitting the non-real-time-critical data.

47. System according to one of Claims 33 to 46, **characterized in that** the system has at least one means which stipulates the duration of the range (14) for transmitting non-real-time-critical data within a transmission cycle (12) automatically using the duration of the range (13) for transmitting real-time-critical data.

48. System according to one of Claim 33 to 47, **characterized in that** the system has at least one means which determines the duration of the range (13) for transmitting real-time-critical data within a transmission cycle (12) respectively using the data which are to be transmitted on a connection-specific basis.

49. System according to one of Claims 33 to 48, **characterized in that** the system has at least one means which stipulates the duration (17) of a transmission cycle (12) at least once before the respective performance of the data transmission.

50. System according to one of Claims 33 to 49, **characterized in that** the system has at least one means which alters the duration (17) of a transmission cycle (12) and/or the duration of the range (13) for transmitting real-time-critical data in a transmission cycle (12).

51. System according to one of Claims 33 to 50, **characterized in that** the system has at least one means which reschedules the real-time communication at any time in the course of operation of an automation system.

52. System according to one of Claims 33 to 51, **characterized in that** the system has at least one means which alters the duration (17) of a transmission cycle (12) by rescheduling the real-time communication.

53. System according to one of Claims 33 to 52, **characterized in that** the system has at least one means which provides a portion of the range (13) of the transmission cycle (12) which is provided for transmitting the real-time-critical data for transmitting data for organizing the data transmission (15).

54. System according to one of Claims 33 to 53, **characterized in that** the system has at least one means which transmits the data for organizing the data transmission (15) at the start of the range (13) for transmitting the real-time-critical data in the transmission cycle (12).

55. System according to one of Claim 33 to 54, **characterized in that** the system has at least one means which for all real-time-critical data messages which are to be transmitted records the transmission and reception times at the transmitter and/or receiver before the start of the respective performance of the data transmission.

56. System according to one of Claims 33 to 55, **characterized in that** the system has at least one means which for all real-time-critical data messages which are to be transmitted records, in all the respective switching units involved, all the times for forwarding the real-time-critical data messages and also the respective associated links via which the real-time-critical data messages are forwarded before the start of the respective performance of the data transmission.

57. System according to one of Claims 33 to 56, **characterized in that** the system has at least one means which ensures that each real-time-critical data message arrives at the relevant switching unit no later than at the forwarding time or earlier.

58. System according to one of Claims 33 to 57, **characterized in that** the system has at least one means which sends or forwards the real-time-critical data messages directly, without any intervening time period.

59. System according to one of Claims 33 to 58, **characterized in that** the system has at least one means which ensures that links in a switchable data network which are not permitted to be used for non-real-time-critical communication are used for real-time-critical communication.

60. System according to one of Claims 33 to 59, **characterized in that** a switching unit is integrated in a subscriber.

61. System according to one of Claims 33 to 60, **characterized in that** a switching unit has two separate access points for the respective subscriber, one access point being provided for interchanging real-time-critical data and the other access point being provided for interchanging non-real-time-critical data.

62. System according to one of Claims 33 to 61, **characterized in that** the system has at least one means which ensures that at least one subscriber in a switchable data network can effect real-time-critical communication and/or non-real-time-critical communication, particularly Internet communication, in parallel in the same switchable data network, with the non-real-time-critical communication which takes place not influencing the real-time-critical communication which takes place in parallel.

63. System according to one of Claims 33 to 62, **characterized in that** the system has at least one means which ensures that at least one arbitrary subscriber, particularly a subscriber with the capability of open, Internet-compatible communication, with or without an associated switching unit, can be added to a switchable data network.

64. Switching unit for a system according to one of Claims 33 to 63, **characterized in that** the switching unit is provided for connecting a first transmission link with wireless data transmission and a second transmission link with wire-connected data transmission.

## Revendications

1. Procédé de transmission de données sur des réseaux de données oommutables, notamment Ethernet dans le domaine d'installations industrielles, dans lequel sont transmises des données critiques en temps réel et non critiques en temps réel, les données étant transmises dans au moins un cycle de transmission (12) de durée réglable (17), chaque cycle de transmission (12) étant divisé en au moins une première région (13) pour la transmission de données critiques en temps réel pour la commande en temps réel et au moins une deuxième région (14) pour la transmission de données non critiques en temps réel, une unité de couplage, destinée à relier une première voie de transmission, à transmission de données sans fil, et une deuxième voie de transmission à transmission de données filaire, met en oeuvre les étapes suivantes pour réaliser une interface de communication entre une première liaison de communication sur la première voie de transmission avec un premier cycle de transmission d'une première longueur et une deuxième liaison de communication sur la deuxième voie de transmission avec un deuxième cycle de transmission d'une deuxième longueur, les première et deuxième liaisons de communication présentant une propriété d'équidistance avec un échange de données effectué de façon cyclique à des cycles de communication équidistants :
- Réception complète d'un télégramme de données selon une liste de réception associée au premier cycle de transmission,
- Stockage du télégramme de données, reçu complètement, dans une mémoire intermédiaire,
- Envoi du télégramme de données selon une liste d'envoi associée au deuxième cycle de transmission.

2. Procédé selon la revendication 1, **caractérisé en ce qu'**une unité de couplage, permettant d'envoyer et/ou de recevoir et/ou de transférer les données à transmettre, est associé à chaque abonné.

3. Procédé selon la revendication 1 ou 2, dans lequel des télégrammes de données, reçus dans le premier cycle de transmission, sont stockés dans des zones de mémoire successives de la mémoire intermédiaire.

4. Procédé selon l'une des revendications précédentes, dans lequel des télégrammes de données, qui doivent envoyés dans le deuxième cycle de transmission, sont lus dans la mémoire intermédiaire, les zones de mémoire respectives étant séparées l'une de l'autre par un décalage.

5. Procédé selon l'une des revendications précédentes, dans lequel, au moyen d'une commande d'accès, on empêche pendant une unité de temps logique un accès à la même zone de mémoire pour la mémorisation temporaire d'un télégramme de données reçu complètement et pour l'envoi de celui-ci.

6. Procédé selon l'une des revendications précédentes, dans lequel la première liaison de communication et la deuxième liaison de communication présentent des débits de transmission différents et les premier et deuxième cycles de transmission sont asynchrones et/ou les première et deuxième longueurs sont identiques ou différentes.

7. Procédé selon l'une des revendications précédentes, dans lequel un télégramme de données est reçu par un premier abonné de la première liaison de communication pendant le premier cycle de transmission et le télégramme de données est envoyé m-fois pendant m cycles de transmission successifs à un deuxième abonné de la deuxième liaison de communication.

8. Procédé selon la revendication 7, dans lequel le télégramme de données n'est envoyé qu'une seule fois pendant le deuxième cycle de transmission et un télégramme de données de remplacement est envoyé m-1 fois pendant des deuxièmes cycles de transmission successifs.

9. Procédé selon l'une des revendications précédentes, dans lequel des données en temps réel sont transmises dans le télégramme de données.

10. Procédé selon l'une des revendications précédentes, dans lequel on utilise comme première et deuxième liaisons de communication à chaque fois un Ethernet industriel, notamment un Realtime Ethernet isochrone ou un Realtime Fast Ethernet.

11. Procédé selon l'une des revendications précédentes, dans lequel plusieurs ports d'entrée et/ou de sortie, à chacun desquels est associée une liste de réception et/ou d'envoi, sont couplés par le biais d'une zone de couplage.

12. Procédé selon l'une des revendications précédentes, dans lequel on utilise des premier et deuxième cycles de transmission de même phase.

13. Procédé selon l'une des revendications précédentes, **caractérisé en ce que** tous les abonnés et toutes les unités de couplage du réseau de données commutable ont toujours une base de temps synchrone commune pour les synchroniser entre eux.

14. Procédé selon l'une des revendications précédentes, **caractérisé en ce que** toutes les données non critiques en temps réel, qui doivent être transmises dans la région (13) d'un cycle (12) de transmission qui est prévue pour la communication critique en temps réel, sont stockées dans une mémoire intermédiaire par l'unité de couplage respective et sont transmises dans la région (14) de ce cycle de transmission ou d'un cycle de transmission suivant qui est prévue pour la communication non critique en temps réel.

15. Procédé selon l'une des revendications précédentes, **caractérisé en ce que** toutes les données non critiques en temps réel, qui ne peuvent pas être transmises dans la région (14) d'un cycle de transmission (12) qui est prévue pour la transmission des données non critiques en temps réel, sont stockées dans la mémoire provisoire par l'unité de couplage respective et sont transmises dans la région (14) d'un cycle de transmission ultérieur qui est prévue pour la transmission des données non critiques en temps réel.

16. Procédé selon l'une des revendications précédentes, **caractérisé en ce que** la durée de la région (14) d'un cycle de transmission (12), qui est destinée à la transmission de données non critiques en temps réel, est déterminée automatiquement par la durée de la région (13) qui est destinée à la transmission de données critiques en temps réel.

17. Procédé selon l'une des revendications précédentes, **caractérisé en ce que** la durée de la région (13) d'un cycle de transmission (12), qui est destinée à la transmission de données critiques en temps réel, est déterminé à chaque fois par les données qui doivent être transmises en fonction de la liaison.

18. Procédé selon l'une des revendications précédentes, **caractérisé en ce que** la durée (17) d'un cycle de transmission (12) est déterminée au moins une fois avant la réalisation respective de la transmission de données.

19. Procédé selon l'une des revendications précédentes, **caractérisé en ce que** la durée (17) d'un cycle de transmission (12) et/ou la durée de la région (13) d'un cycle de transmission (12) qui est destinée à la transmission de données critiques en temps réel peuvent être modifiées.

20. Procédé selon l'une des revendications précédentes, **caractérisé en ce qu'**un cycle de transmission (12) est utilisé avec une durée (17) comprise entre 1 microseconde et 10 secondes.

21. Procédé selon l'une des revendications précédentes, **caractérisé en ce que** de nouveaux projets de communication en temps réel peuvent être réalisés à tout moment pendant le fonctionnement en cours d'un système d'automatisation.

22. Procédé selon l'une des revendications précédentes, **caractérisé en ce que** la durée (17) d'un cycle de transmission (12) peut être modifiée par un nouveau projet de communication en temps réel.

23. Procédé selon l'une des revendications précédentes, **caractérisé en ce qu'**une partie de la région (13) du cycle de transmission (12), qui est prévue pour la transmission des données critiques en temps réel, est prévue pour la transmission de données destinées à l'organisation de la transmission de données (15).

24. Procédé selon l'une des revendications précédentes, **caractérisé en ce que** les données destinées à l'organisation de la transmission de données (15) sont transmises au début de la région (13) du cycle de transmission (12) qui est prévue pour la transmission de données critiques en temps réel.

25. Procédé selon l'une des revendications précédentes, **caractérisé en ce que** les données destinées à l'organisation de la transmission de données (15) contiennent des données destinées à la synchronisation entre les abonnés et les unités de couplage du réseau de données et/ou des données destinées à détecter la topologie du réseau.

26. Procédé selon l'une des revendications précédentes, **caractérisé en ce qu'**il est mentionné, pour tous les télégrammes de données critiques en temps réel à transmettre, l'instant d'envoi et de réception au niveau de l'émetteur et/ou du récepteur avant le début de la réalisation respective de la transmission de données.

27. Procédé selon l'une des revendications précédentes, **caractérisé en ce qu'**il est mentionné, pour tous les télégrammes de données critiques en temps réel à transmettre, dans toutes les unités de couplage participantes tous les instants de transfert des télégrammes de données critiques en temps réel ainsi que les voies de liaison associées sur lesquelles les télégrammes de données critiques en temps réel sont transférés, avant le début de la réalisation respective de la transmission de données.

28. Procédé selon l'une des revendications précédentes, **caractérisé en ce que** chaque télégramme de données critique en temps réel arrive au plus tard à l'instant de transfert ou plus tôt à l'unité de couplage correspondante.

29. Procédé selon l'une des revendications précédentes, **caractérisé en ce que** les télégrammes de données critiques en temps réel sont envoyés, respectivement transmis, immédiatement sans intervalle de temps.

30. Procédé selon l'une des revendications précédentes, **caractérisé en ce que** des voies de liaison d'un réseau de données commutable, qui sont interdites à la communication non critique en temps réel, sont utilisées dans la communication critique en temps réel.

31. Procédé selon l'une des revendications précédentes, **caractérisé en ce que** au moins un abonné d'un réseau de données commutable peut effectuer une communication critique en temps réel et/ou une communication non critique en temps réel, notamment une communication par l'Internet, en parallèle sur le même réseau de données commutable, la communication non critique en temps réel en cours n'influant pas sur la communication critique en temps réel parallèle en cours.

32. Procédé selon l'une des revendications précédentes, **caractérisé en ce que** au moins un abonné quelconque, notamment un abonné pouvant établir une communication ouverte par Internet, peut être ajouté avec ou sans unité de couplage associée, à un réseau de données commutable.

33. Système de transmission de données sur des réseaux de données commutables, notamment Ethernet dans le domaine d'installations industrielles, comportant au moins un dispositif de traitement de données pouvant être couplé à un réseau de données commutable, système par lequel peuvent être transmises des données critiques en temps réel et non critiques en temps réel, le système comportant des moyen de transmission de données dans au moins un cycle de transmission (12) de durée réglable (17), chaque cycle de transmission (12) étant divisé en au moins une première région (13) pour la transmission de données critiques en temps réel pour la commande en temps réel et au moins une deuxième région (14) pour la transmission de données non critiques en temps réel, le système comportant une unité de couplage comprenant un circuit électronique destiné à une interface de communication modulable, l'unité de couplage étant destinée à relier une première voie de transmission à transmission de données sans fil et une deuxième voie de transmission à transmission de données filaire, l'interface de communication étant formée entre une première liaison de communication (116) sur la première voie de transmission avec un premier cycle de transmission (117) d'une première longueur et une deuxième liaison de communication (112) sur la deuxième voie de transmission avec un deuxième cycle de transmission (113) d'une deuxième longueur, avec une liste de réception (105, 115, 119, 133) pour le premier cycle de transmission et une liste d'envoi (106, 114, 118, 131) pour le deuxième cycle de transmission, un télégramme de données (120, 121, 122, 123, 124, 125, 126, 127, 128) reçu selon la liste de réception étant associé à un élément de la liste d'envoi, et avec un tampon de réception (104, 134), une tampon d'envoi (107, 132) et une mémoire intermédiaire (108) destinée à des télégrammes de données reçus complètement selon la liste de réception et des télégrammes de données envoyés selon la liste d'envoi, le tampon de réception et le tampon d'envoi pouvant être reliés à la mémoire intermédiaire et les premiers et deuxième liaisons de communication présentant une propriété d'équidistance.

34. Système selon la revendication 33, **caractérisé en ce que** l'unité de couplage, qui est destinée à l'émission et/ou à la réception et/ou au transfert des données à transmettre, est associée dans le système à chaque abonné.

35. Système selon la revendication 33 ou 34 comportant dans le circuit électronique une commande d'accès (109, 132) permettant de commander les accès des tampons d'émission et de réception à la mémoire intermédiaire.

36. Système selon l'une des revendications 33 à 35, dans lequel des télégrammes de données reçus dans le premier cycle de transmission sont stockés dans des zones de mémoire successives de la mémoire intermédiaire avec un pointeur de réception (136) indiquant la zone de mémoire libre suivante dans laquelle un télégramme de données reçus entièrement sera temporairement mémorisé.

37. Système selon l'une des revendications précédentes 33 à 36, dans lequel les première et deuxième liaisons de communication ont des débits de transmission différents et sont asynchrones.

38. Système selon l'une des revendications précédentes 33 à 37, dans lequel les premier et deuxièmes cycles de transmission sont synchrones et les première et deuxième longueurs sont identiques ou l'un est un multiple entier de l'autre.

39. Système selon l'une des revendications précédentes 33 à 38, dans lequel la liste d'envoi est conformée pour envoyer m fois un télégramme de données dans m cycles de transmission successifs après que le télégramme de données a été reçu n fois dans le premier cycle de transmission selon la liste de réception.

40. Système selon la revendication 39, dans lequel le télégramme de données n'est envoyé qu'une seule fois selon la liste d'envoi et un nombre m-1 de télégrammes de données de remplacement est envoyé en plus selon la liste d'envoi dans le deuxième cycle de transmission.

41. Système selon l'une des revendications précédentes 33 à 40, dans lequel la première liaison de communication et/ou la deuxième liaison de communication sont bidirectionnelles et une liste d'envoi et une liste de réception sont associées à chacune des liaisons de communication bidirectionnelle.

42. Système selon l'une des revendications précédentes 33 à 41, dans lequel le télégramme de données est un ensemble de données en temps réel.

43. Système selon l'une des revendications précédentes 33 à 42 comportant dans le circuit électronique plusieurs ports d'entrée et/ou de sortie à chacun desquels est associée une liste de réception et/ou d'envoi et qui comporte une zone de couplage (129) destinée à coupler l'un des ports à un ou plusieurs des autres ports.

44. Système selon l'une des revendications 33 à 43, **caractérisé en ce que** le système comporte au moins un moyen qui délivre à tous les abonnés et à toutes les unités de couplage du réseau de données commutable une base de données synchrone commune pour les synchroniser entre eux.

45. Système selon l'une des revendications 33 à 44, **caractérisé en ce que** le système comporte au moins un moyen permettant que soient stocker dans une mémoire intermédiaire par l'unité de couplage respective toutes les données non critiques en temps réel qui doivent être transmises dans la région (13) d'un cycle de transmission (12) qui est prévue pour la communication critique en temps réel et qu'elles soient transmises dans la région (14) de ce cycle de transmission ou d'un cycle de transmission suivant prévue pour la communication non critique en temps réel.

46. Système selon l'une des revendications 33 à 45, **caractérisé en ce que** le système comporte au moins un moyen qui permet que toutes les données non critiques en temps réel qui ne peuvent pas être transmises dans la région (14) d'un cycle de transmission (12) qui est prévue pour la transmission des données non critiques en temps réel soient stockées dans une mémoire intermédiaire par l'unité de couplage respective, et qu'elles soient transmises dans la région (14) d'un cycle de transmission ultérieur qui est prévue pour la transmission des données non critiques en temps réel.

47. Système selon l'une des revendications 33 à 46, **caractérisé en ce que** le système comporte au moins un moyen qui permet de déterminer automatiquement la durée de la région (14) d'un cycle de transmission (12) qui est prévue pour la transmission de données non critiques en temps réel par le biais de la durée de la région (13) qui est prévue pour la transmission de données critiques en temps réel.

48. Système selon l'une des revendications 33 à 47, **caractérisé en ce que** le système comporte au moins un moyen qui permet de déterminer la durée de la région (13) d'un cycle de transmission (12) qui est prévue pour la transmission de données critiques en temps réel à chaque fois par les données qui doivent être transmises en fonction de la liaison.

49. Système selon l'une des revendications 33 à 48, **caractérisé en ce que** le système comporte au moins un moyen qui permet de déterminer la durée (17) d'un cycle de transmission (12) au moins une fois avant la réalisation respective de la transmission de données.

50. Système selon l'une des revendications 33 à 49, **caractérisé en ce que** le système comporte au moins un moyen qui permet de modifier la durée (17) d'un cycle de transmission (12) et/ou la durée de la région (13) d'un cycle de transmission (12) qui est prévue pour la détermination de données critiques en temps réel.

51. Système selon l'une des revendications 33 à 50, **caractérisé en ce que** le système comporte au moins un moyen qui permet de réaliser de nouveaux projets de communication en temps réel à tout moment dans le fonctionnement en cours d'un système d'automatisation.

52. Système selon l'une des revendications 33 à 51, **caractérisé en ce que** le système comporte au moins un moyen qui permet de modifier la durée (17) d'un cycle de transmission (12) en réalisant un nouveau projet de communication en temps réel.

53. Système selon l'une des revendications 33 à 52, **caractérisé en ce que** le système comporte au moins un moyen qui permet de prévoir une partie de la région (13) du cycle de transmission (12), qui est prévue pour la transmission des données critiques en temps réel, pour la transmission de données destinées à l'organisation de la transmission de données (15).

54. Système selon l'une des revendications 33 à 53, **caractérisé en ce que** le système comporte au moins un moyen qui permet de transmettre les données destinées à l'organisation de la transmission de données (15) au début de la région (13) du cycle de transmission (12) qui est prévue pour la transmission de données critiques en temps réel.

55. Système selon l'une des revendications 33 à 54, **caractérisé en ce que** le système comporte au moins un moyen permettant de mentionner, pour tous les télégrammes de données critiques en temps réel à transmettre, l'instant d'envoi et de réception au niveau de l'émetteur et/ou du récepteur avant le début de la réalisation respective de la transmission de données.

56. Système selon l'une des revendications 33 à 55, **caractérisé en ce que** le système comporte au moins un moyen permettant de mentionner, pour tous les télégrammes de données critiques en temps réel à transmettre, dans toutes les unités de couplage participantes tous les instants de transfert des télégrammes de données critiques en temps réel ainsi que les voies de liaison associées sur lesquelles les télégrammes de données critiques en temps réel sont transférés, avant le début de la réalisation respective de la transmission de données.

57. Système selon l'une des revendications 33 à 56, **caractérisé en ce que** le système comporte au moins un moyen permettant à chaque télégramme de données critique en temps réel d'arriver au plus tard à l'instant de transfert ou plus tôt à l'unité de couplage correspondante.

58. Système selon l'une des revendications 33 à 57, **caractérisé en ce que** le système comporte au moins un moyen permettant de transférer, respectivement transmettre, les télégrammes de données critiques en temps réel immédiatement sans intervalle de temps intermédiaire.

59. Système selon l'une des revendications 33 à 58, **caractérisé en ce que** le système comporte au moins un moyen permettant d'utiliser des voies de liaison d'un réseau de données commutable, qui ne doivent pas être utilisées pour la communication non critique en temps réel, dans la communication critique en temps réel.

60. Système selon l'une des revendications 33 à 59, **caractérisé en ce qu'**une unité de couplage est intégrée chez un abonné.

61. Système selon l'une des revendications 33 à 60, **caractérisé en ce qu'**une unité de couplage comporte deux accès séparés à l'abonné respectif, un accès étant prévu pour l'échange de données critiques en temps réel et l'autre accès étant prévu pour l'échange de données non critiques en temps réel.

62. système selon l'une des revendications 33 à 61, **caractérisé en ce que** le système comporte au moins un moyen permettant à au moins un abonné d'un réseau de données commutable d'effectuer une communication critique en temps réel et/ou une communication non critique en temps réel, notamment une communication par l'Internet, en parallèle sur le même réseau de données commutable, la communication non critique en temps réel en cours n'influant pas sur la communication critique en temps réel parallèle en cours.

63. Système selon l'une des revendications 33 à 62, **caractérisé en ce que** le système comporte au moins un moyen permettant d'ajouter au moins un abonné quelconque, notamment un abonné pouvant établir une communication ouverte par Internet, avec ou sans unité de couplage associée, à un réseau de données commutable.

64. Unité de couplage destinée à un système selon l'une des revendications 33 à 63, **caractérisée en ce que** l'unité de couplage est destinée à relier une première voie de transmission à transmission de données sans fil et une deuxième voie de transmission à transmission de données filaire.
